# EUROPÄISCHE PATENTSCHRIFT

(11) **EP 1 858 903 B1**
(45) Veröffentlichungstag und Bekanntmachung des Hinweises auf die Patenterteilung: **08.10.2008**
(21) Anmeldenummer: 06708615.7
(22) Anmeldetag: 03.03.2006
(51) Int. Cl.: C07F 5/06, C07C 29/56, C07C 35/17

(54) **DIARYLPHENOXY-ALUMINIUM-VERBINDUNGEN**
DIARYLPHENOXY ALUMINUM COMPOUNDS
COMPOSES D'ALUMINIUM DIARYLPHENOXY

(30) Priorität: 03.03.2005 DE 102005010329; 16.09.2005 DE 102005044518
(43) Veröffentlichungstag der Anmeldung: 28.11.2007
(60) Teilanmeldung: 08154812.5
(73) Patentinhaber: BASF SE, 67056 Ludwigshafen (DE)
(72) Erfinder: FRIEDRICH, Marko, 64653 Lorsch (DE); EBEL, Klaus, 68623 Lampertheim (DE); GÖTZ, Norbert, 67547 Worms (DE); KRAUSE, Wolfgang, 68782 Brühl-Rohrhof (DE); ZAHM, Christian, 67063 Ludwigshafen (DE)
(86) Internationale Anmeldenummer: PCT/EP2006/060416
(87) Internationale Veröffentlichungsnummer: WO 2006/092433

(56) Entgegenhaltungen:
- EP-A- 1 225 163

## Beschreibung

### Technisches Gebiet der Erfindung:

Die vorliegende Erfindung betrifft Diarylphenoxy-Aluminium-Verbindungen, die erhältlich sind durch Umsetzung eines Bis(diarylphenol)-Liganden der Formel (I) 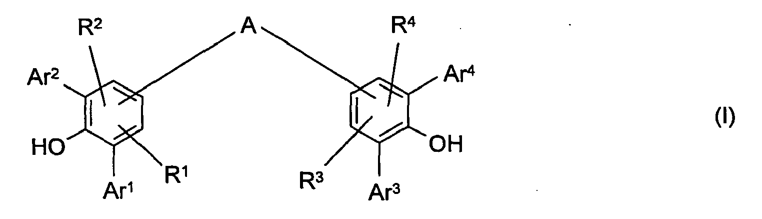 mit einer Alkylaluminiumverbindung und/oder einem komplexen Aluminiumhydrid.

Die Erfindung betrifft darüber hinaus die Verwendung derartiger Diarylphenoxy-Aluminium-Verbindungen als Katalysatoren.

Darüber hinaus betrifft die Erfindung ein Verfahren zur Herstellung von Isopulegol bzw. Diastereomerengemischen des Isopulegols durch Cyclisierung von Citronellal in Gegenwart von Diarylphenoxy-Aluminium-Verbindungen als Katalysatoren.

Menthol stellt weltweit die mengenmäßig wichtigste Aromachemikalie dar. Der Bedarf an Menthol wird nach wie vor zu einem großen Teil durch Isolierung aus natürlichen Quellen gedeckt. Daneben existieren jedoch auch synthetische Zugänge zum Menthol, teils in racemischer Form, teils in Form des natürlichen Enantiomeren L-Menthol.

Ein wichtiges Zwischenprodukt zur Herstellung von racemischem wie optisch aktivem Menthol stellt Isopulegol dar, das üblicherweise durch cyclisierende Oxo-En-Reaktion von Citronellal in Gegenwart von Lewis-sauren Katalysatoren hergestellt wird und dabei in der Regel in Form von Gemischen der vier Diastereomere Isopulegol, iso-Isopulegol, neo-Isopulegol und neoiso-Isopulegol anfällt.

### Stand der Technik:

Als geeignete Katalysatoren zur Durchführung der vorstehend genannten Cyclisierung von Citronellal zu Isopulegol wurden sowohl heterogene Katalysatoren, wie SiO₂, Al₂O₃/SiO₂-, SiO₂/ZrO₂-, SiO₂/TiO₂-Mischkatalysatoren, Mordenite, Fajausite, Monmorillonite und Zeolithe - als auch homogene Katalysatoren, wie beispielsweise Sulfonsäuren oder Lewis-Säuren, wie beispielsweise SnCl₄, ZnCl₂ oder ZnBr₂ beschrieben.

Ein industriell eingesetzter Katalysator zur Cyclisierung von Citronellal ist Zinkbromid. Mit diesem Katalysator werden allerdings nur Ausbeuten von ca. 87 % und Diastereoselektivitäten von 91 : 9 (Verhältnis von Isopulegol zu den weiteren Isomeren des Isopulegols) erhalten.

Die EP-A 1 225 163 beschreibt die Cyclisierung von Citronellal zu Isopulegol in Gegenwart von Tris(2,6-diphenylphenol)-aluminium-Katalysatoren. Tris(2,6-diphenylphenol)-aluminium ist literaturbekannt und als Katalysator für selektive 1,4-Funktionalisierungen von α,β-ungesättigten Carbonylverbindungen und für spezielle Claisen-Umlagerungen beschrieben, beispielsweise in Angew. Chem. Int. Ed. 2004, 43, 994.

S. Saito et al. beschreiben in Synlett, 1, 57 - 58 ein Aluminium Trisphenoxide Polymer und dessen Verwendung als Lewis-sauren Katalysator zur Durchführung von Diels-Alder-Reaktionen α,β-ungesättigter Aldehyde als Dienophile mit Dienen. Das genannte Trisphenoxide Polymer wird erhalten durch Umsetzung von 4, 4'-(2, 6, 2', 6'-tetraphenyl)biphenol mit Trimethylaluminium in Toluol unter Behandlung mit Ultraschall. Als Nebenprodukte der gewünschte Diels-Alder-Addukte werden dimere Ester als Resultat einer nachgeschalteten Tishchenko-Reaktion beschrieben.

Die JP 9-278817 A betrifft Katalysatoren zur Olefinpolymerisation die als Ersatz für Aluminoxane geeignet sind. Die Katalysatoren umfassen (a) ein Übergangsmetall der Gruppen 4 bis 6 des Periodensystems der Elemente, das an ein Cyclopentadienylsystem oder zwei verbrückte Cyclopentadienylsysteme gebunden ist, (b) ein Aluminiumalkyl und (c) eine aromatische Verbindung mit mindestens zwei an den aromatischen Ring gebundenen Hydroxy-Gruppen.

### Aufgabe der Erfindung:

Bei dem als nächstem Stand der Technik zu betrachtenden Verfahren zur Cyclisierung von Citronellal zu Isopulegol in Gegenwart von Tris(2,6-diphenylphenol)-aluminium-Katalysatoren gemäß EP-A 1 225 163 werden teure und nur aufwändig herzustellende Katalysatorkomplexe eingesetzt. Ein Nachteil des beschriebenen, in homogener Phase durchzuführenden Verfahrens ist, dass keine Wiedergewinnung der eingesetzten Katalysatorkomplexe möglich ist, da der Katalysatorkomplex nach beendeter Reaktion hydrolysiert wird. Auch eine mögliche Wiedergewinnung und Wiedereinsetzbarkeit des dabei freigesetzten Liganden ist nicht beschrieben.

Aufgabe der vorliegenden Erfindung war es demnach, ein Katalysatorsystem bereitzustellen, dass die Cyclisierung von Citronellal zu Isopulegol zumindest vergleichbar gut katalysiert wie bekannte Katalysatorsysteme und dass sich entweder nach erfolgter Umsetzung in verfahrenstechnisch einfacher Weise, sowie in hoher Reinheit und Ausbeute zurückgewinnen und wiedereinsetzen lässt, oder dessen Liganden sich nach erfolgter Umsetzung in verfahrenstechnisch einfacher Weise, sowie in hoher Reinheit und Ausbeute zurückgewinnen und wiedereinsetzen lassen.

### Beschreibung der Erfindung und der bevorzugten Ausführungsformen:

Die Aufgabe wurde erfindungsgemäß gelöst durch die Bereitstellung von Diarylphenoxy-Aluminium-Verbindungen, die erhältlich sind durch Umsetzung eines Bis(diarylphenol)-Liganden der Formel (I) 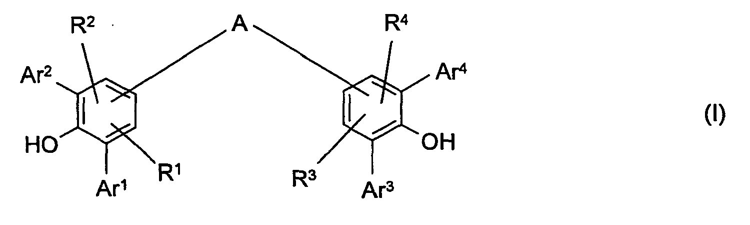 wobei
- Ar¹, Ar², Ar³, Ar⁴: gleich oder verschieden sind und jeweils unabhängig voneinander einen Arylrest mit 6 bis15 Kohlenstoffatomen oder einen Heteroarylrest mit 2 bis 15 Kohlenstoffatomen, die gegebenenfalls jeweils 1 bis 7 gleiche oder verschiedene Substituenten, ausgewählt aus der Gruppe der Substituenten C₁- bis C₆-Alkyl, C₁- bis C₆-Perfluoralkyl, C₁- bis C₆-Alkoxy, C₇- bis C₁₂-Aralkyl, Halogen, -SiR^{5a}R^{6a}R^{7a}, substituiertes oder unsubstituiertes C₆- bis C₁₀-Aryl, -NR^{8a}R^{9a}, -SR^{10a} und-NO₂ tragen können, bedeuten,
- R¹, R², R³, R⁴: gleich oder verschieden sind und jeweils unabhängig voneinander Wasserstoff, C₁- bis C₆-Alkyl, C₁- bis C₆-Perfluoralkyl, C₁- bis C₆-Alkoxy, C₇- bis C₁₂-Aralkyl, Halogen, -SiR^{5b}R^{6b}R^{7b}, substituiertes oder unsubstituiertes C₆- bis C₁₀-Aryl, -NR^{8b}R^{9b}, -SR10^{b} und/oder -NO₂ bedeuten und R¹ oder R² und/oder R³ oder R⁴ gemeinsam mit A einen aromatischen oder nicht-aromatischen Cyclus bilden kann, bedeuten und
- A: (1) für einen geradkettigen oder verzweigten und/oder cyclischen Kohlenwasserstoffrest mit 1 bis 25 Kohlenstoffatomen steht, der gesättigt oder ein-
oder mehrfach ungesättigt und/oder teilweise aromatisch sein kann und gegebenenfalls eines oder mehrere gleiche oder verschiedene Heteroatome, ausgewählt aus der Gruppe der Heteroatome O, S und NR¹¹ und/oder eine oder mehrere gleiche oder verschiedene funktionelle Gruppen, ausgewählt aus der Gruppe der funktionellen Gruppen C(O), S(O) und S(O)₂, aufweisen kann und gegebenenfalls einen oder mehrere gleiche oder verschiedene Substituenten, ausgewählt aus der Gruppe der Substituenten C₁- bis C₆-Alkyl, C₁- bis C₆-Perfluoralkyl, C₁- bis C₆-Alkoxy, C₁- bis C₁₀- Acyloxy, C₇- bis C₁₂-Aralkyl, Halogen, -SiR^{5c}R^{6c}R^{7c}, substituiertes oder unsubstituiertes C₆- bis C₁₀-Aryl, substituiertes oder unsubstituiertes C₂- bis C₁₀-Hetaryl, -NR^{8c}R^{9c}, -SR^{10c}, -NO₂, C₁-bis C₁₂-Acyl und C₁- bis C₁₀- Carboxyl tragen kann, oder
(2) für einen Arylrest mit 6 bis15 Kohlenstoffatomen oder einen Heteroarylrest mit 2 bis 15 Kohlenstoffatomen steht, die gegebenenfalls jeweils 1 bis 5 Substituenten, ausgewählt aus der Gruppe der Substituenten C₁- bis C₆-Alkyl, C₁- bis C₆-Perfluoralkyl, C₁- bis C₆-Alkoxy, C₇- bis C₁₂-Aralkyl, Halogen, - SiR^{5d}R^{6d}R^{7d}, substituiertes oder unsubstituiertes C₆- bis C₁₀-Aryl, -NR^{8d}R^{9d}, SR^{10d} und NO₂ tragen können, oder
(3) für eine funktionelle Gruppe oder ein Heteroatom ausgewählt aus der Gruppe -O-, -S-, -N(R¹¹)-, -S(O)-, -C(O)-, -S(O)₂-, -P(R¹¹)-, -(R¹¹)P(O)- und - Si(R¹²R¹³) steht,
   wobei die Reste R^{5a}, R^{6a}, R^{7a}, R^{8a}, R^{9a}, R^{10a} bis R^{5d}, R^{6d}, R^{7d}, R^{8d}, R^{9d}, R^{10d} und R¹¹ bis R¹³ jeweils unabhängig voneinander für C₁- bis C₆-Alkyl, C₇- bis C₁₂-Aralkyl und/oder substituiertes oder unsubstituiertes C₆- bis C₁₀-Aryl stehen, und die Reste R^{8a} und R^{9a}, R^{8b} und R^{9b}, R^{8c} und R^{9c}, R^{8d} und R^{9d} unabhängig voneinander jeweils gemeinsam auch einen cyclischen Kohlenwasserstoffrest mit 2 bis 8 Kohlenstoffatomen bilden können, der eines oder mehrere gleiche oder verschieden Heteroatome ausgewählt aus der Gruppe O, S und NR^{11a} aufweisen kann und R^{11a} die für R¹¹ angegebenen Bedeutungen haben kann,
   mit einer Aluminium-Verbindung der Formel (II)

   (R¹⁴)₃₋ₚAlHₚ (II),

   wobei
   - AI: Aluminium bedeutet und
   - R¹⁴: einen verzweigten oder unverzweigten Alkylrest mit 1 bis 5 Kohlenstoffatomen und
   - p: 0 oder eine ganze Zahl von 1 bis 3 bedeutet,
   und/oder
   mit einer Aluminium-Verbindung der Formel (III)

   MAIH₄ (III),

   wobei
   AI Aluminium bedeutet und
   M Lithium, Natrium oder Kalium bedeutet.

Die zur Herstellung der erfindungsgemäßen Diarylphenoxy-Aluminium-Verbindungen einzusetzenden Bis(diarylphenol)-Liganden der Formel (I) weisen zwei Phenolsysteme auf, die jeweils in beiden ortho-Positionen zur phenolischen Hydroxy-Gruppe durch Aromaten bzw. Heteroaromaten (Ar¹ bis Ar⁴) substituiert sind und über ein Strukturelement A miteinander verknüpft sind und gegebenenfalls noch weitere Substituenten (R¹ bis R⁴) tragen können.

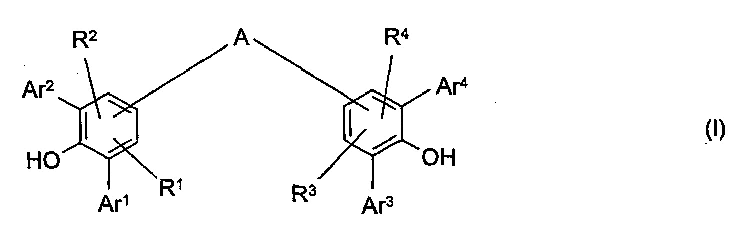

Die aromatischen bzw. heteroaromatischen Substituenten Ar¹ bis Ar⁴ können unabhängig voneinander gleich oder verschieden sein. Bevorzugt sind die beiden jeweils an ein Phenolsystem gebundenen Substituenten (Ar¹ und Ar² bzw. Ar³ und Ar⁴) paarweise gleich. Insbesondere bevorzugt sind alle vier Substituenten Ar¹ bis Ar⁴ gleich.

Die genannten Substituenten Ar¹ bis Ar⁴ sind Arylreste mit 6 bis 15, bevorzugt 6 bis 10 Kohlenstoffatomen oder Heteteroarylreste mit 2 bis 15, bevorzugt 3 bis 10 Kohlenstoffatomen im aromatischen Ringsystem.

Beispielhaft seien als Arylreste mit 6 bis 15 Kohlenstoffatomen genannt: Phenyl, Naphty, Antracenyl, bevorzugt Phenyl und Naphthyl.

Die genannten Heteroarylreste mit 2 bis 15 Kohlenstoffatomen weisen 1 bis etwa 6, in der Regel 1 bis 3 gleiche oder verschiedene Heteroatome, die ausgewählt sind aus der Gruppe der Heteroatome O, S und N, auf. Beispielhaft seien dafür die folgenden Heteroarylreste genannt: 2-Furyl, 3-Furyl, 2-Thienyl, 3-Thienyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,4-Triazol-3-yl, 1,3,4-Oxadiazol-2-yl, 1,3,4-Thiadiazol-2-yl und 1,3,4-Triazol-2-yl, 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl und 1,2,4-Triazin-3-yl, 2-Furyl, 3-Furyl, 2-Thienyl, 3-Thienyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,4-Triazol-3-yl, 1,3,4-Oxadiazol-2-yl, 1,3,4-Thiadiazol-2-yl und 1,3,4-Triazol-2-yl, 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl und 1,2,4-Triazin-3-yl, Benzofuryl, Isobenzofuryl, Benzothienyl, Indolyl, Isoindolyl, Carbazolyl, Pyridyl, Chinolyl, Isochinolyl und Pyrazyl. Bevorzugte Heteroarylreste sind beispielsweise: 2-Furyl, 2-Pyridyl, 2-Imidazoyl.

Die vorstehend für Ar¹ bis Ar⁴ genannten Aryl bzw. Heteroarylreste können jeweils unabhängig voneinander unsubstituiert sein oder 1 bis etwa 7, bevorzugt 1 bis 3, insbesondere 1 oder 2 gleiche oder verschieden Substituenten tragen, die ausgewählt sind aus der Gruppe der Substituenten: C₁- bis C₆-Alkyl, C₁- bis C₆-Perfluoralkyl, C₁- bis C₆-Alkoxy, C₇- bis C₁₂-Aralkyl, Halogen, -SiR^{5a}R^{6a}R^{7a}, substituiertes oder unsubstituiertes C₆- bis C₁₀-Aryl, -NR^{8a}R^{9a}, -SR^{10a}, -NO₂, wobei die Reste R^{5a}, R^{6a}, R^{7a}, R^{8a}, R^{9a}, R^{10a} und R¹¹ bis R¹³ jeweils unabhängig voneinander für C₁- bis C₆-Alkyl, C₇- bis C₁₂-Aralkyl und/oder substituiertes oder unsubstituiertes C₆- bis C₁₀-Aryl stehen, und die Reste R^{8a} und R^{9a} unabhängig voneinander jeweils gemeinsam auch einen cyclischen Kohlenwasserstoffrest mit 2 bis 8 Kohlenstoffatomen bilden können, der eines oder mehrere gleiche oder verschiedene Heteroatome ausgewählt aus der Gruppe O, S und NR^{11a} aufweisen kann und R^{11a} die für R¹¹ angegebenen Bedeutungen haben kann.

Dabei können den genannten Substituenten im Rahmen der gesamten vorliegenden Erfindung die nachfolgend beispielhaft angegebenen Bedeutungen zukommen:

C₁-C₆-Alkyl wie z.B. Methyl, Ethyl, Propyl, 1-Methylethyl, Butyl, 1-Methyl-propyl, 2-Methylpropyl, 1,1-Dimethylethyl, Pentyl, Cyclopentyl, 1-Methylbutyl, 2-Methylbutyl, 3-Methylbutyl, 2,2-Di-methylpropyl, 1-Ethylpropyl, Hexyl, Cyclohexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl;

C₁- bis C₆-Perfluoralkyl wie z.B. Trifluormethyl, Pentafluorethyl, Heptafluorpropyl, Heptafluorisporopyl, Nonafluorbutyl;

C₁- bis C₆-Alkoxy wie z.B. Methoxy, Ethoxy, Propoxy, 1-Methylethoxy, Butoxy, 1-Methylpropoxy, 2-Methylpropoxy und 1,1-Dimethylethoxy, Pentoxy, 1-Methylbutoxy, 2-Methylbutoxy, 3-Methoxylbutoxy, 1,1-Dimethylpropoxy, 1,2-Dimethylpropoxy, 2,2-Dimethylpropoxy, 1-Ethylpropoxy, Hexoxy, 1-Methylpentoxy, 2-Methylpentoxy, 3-Methylpentoxy, 4-Methylpentoxy, 1,1-Dimethylbutoxy,1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy und 1-Ethyl-2-methylpropoxy;

C₇- bis C₁₂-Aralkyl wie z.B. Benzyl, 1-Phenylethyl, 2-Phenylethyl;

C₁- bis C₁₀- Acyloxy wie z.B. Acetyloxy, Propionyloxy;

C₁- bis C₁₀- Carboxyl wie z.B. Methoxycarbonyl, Ethoxycarbonyl, Propyloxycarbonyl, Isopropyloxycarbonyl;

C₁- bis C₁₀- Acyl wie z.B. Formyl, Acetyl, Propionyl.

Unter dem Begriff substituiertes oder unsubstituiertes C₆- bis C₁₀-Aryl sind wie vorstehend genannte Arylreste zu verstehen, die einen oder mehrere, in der Regel 1 bis etwa 3, gleiche oder verschiedene Substituenten aufweisen, wobei die Substituenten beispielsweise aus den wie vorstehend bzw. nachfolgend genannten Substituenten C₁-bis C₆-Alkyl, C₁- bis C₆-Perfluoralkyl, C₁- bis C₆-Alkoxy, C₇- bis C₁₂-Aralkyl, Halogen, Silyl, Dialkylamino und Nitro ausgewählt sein können.

Unter dem Begriff Halogen ist im Rahmen der vorliegenden Erfindung Fluor, Chlor, Brom und Jod, bevorzugt Fluor und Chlor zu verstehen.

Unter den Substituenten -SiR^{5a}R^{6a}R^{7a} bis -SiR^{5d}R^{6d}R^{7d} sind im Rahmen der vorliegenden Erfindung jeweils Silyl-Substituenten mit jeweils unabhängig voneinander drei gleichen oder verschiedenen Resten, die ausgewählt sind unter den Resten C₁- bis C₆-Alkyl, C₇- bis C₁₂-Aralkyl und substituiertes oder unsubstituiertes C₆- bis C₁₀-Aryl zu verstehen. Beispielhaft seien dafür etwa die Silylsubstituenten Trimethylsilyl, Triethylsilyl, tert-Butyl-dimethylsilyl und tert.Butyl-diphenylsilyl genannt.

Die Substituenten -NR^{8a}R^{9a} bis -NR^{8d}R^{9d} bedeuten im Rahmen der vorliegenden Erfindung jeweils Amino-Substituenten, die jeweils unabhängig voneinander zwei gleiche oder verschiedene, bevorzugt zwei gleiche Rest tragen, die ausgewählt sind unter den vorstehend beschriebenen Resten C₁- bis C₆-Alkyl, C₇- bis C₁₂-Aralkyl und/oder substituiertes oder unsubstituiertes C₆- bis C₁₀-Aryl. Beispielhaft seien als Amino-Substituenten genannt: Dimethylamino, Diethylamino, Dibenzylamino, Diallylamino, Diisopropylamino. Die Reste R^{8a} und R^{9a} bis R^{8d} und R^{9d} können im Rahmen der vorliegenden Erfindung unabhängig voneinander jeweils gemeinsam auch einen cyclischen Kohlenwasserstoffrest mit 2 bis 8 Kohlenstoffatomen bilden, der eines oder mehrere gleiche oder verschieden Heteroatome ausgewählt aus der Gruppe O, S, NR^{11a} aufweisen kann. Der Rest R^{11a} kann dabei wie vorstehend beschriebenes C₁- bis C₆-Alkyl, C₇- bis C₁₂-Aralkyl und/oder substituiertes oder unsubstituiertes C₆- bis C₁₀-Aryl bedeuten. Beispielhaft seien für diese cyclischen Substituenten R^{8a} und R^{9a} bis R^{8d} und R^{9d} etwa genannt: Piperidinyl, Morpholinyl, N-Methylpiperazinyl, N-Benzyl-Piperazinyl.

Bei den Substituenten -SR^{10a} steht der Rest R^{10a} für wie vorstehend definiertes C₁- bis C₆-Alkyl, C₇- bis C₁₂-Aralkyl und/oder substituiertes oder unsubstituiertes C₆- bis C₁₀-Aryl, bevorzugt für Methyl, Ethyl, Isopropyl, Phenyl, Benzyl.

Als im Rahmen der vorliegenden Erfindung bevorzugte aromatische oder heteroaromatische Substituenten Ar¹, Ar², Ar³, Ar⁴ seien beispielhaft genannt: Phenyl, 4-Methylphenyl-, 2,4,6- Trimethylphenyl, Naphthyl, 2-Fluorphenyl, 4-Fluorphenyl, 4-Chlorphenyl, 4-Bromphenyl, 3-Fluorphenyl, 3-Chlorphenyl, 3,5-Difluorphenyl, 3,5-Dichlorphenyl, 2,3,6-Trichlorphenyl, 2,4,6-Trichlorphenyl, 2-Methylphenyl, 4-Methylphenyl, 2,4,5-Trimethylphenyl, 2,4,6-Trimethylphenyl. 2-Isopropylphenyl, 4-Isopropylphenyl, 4-tert.-Butylphenyl, 4-n-Butylphenyl, 3-Trifluormethylphenyl, 4-Trifluormethylphenyl, 3,5-Bis(trifluormethyl)phenyl, 4-Arylphenyl, 3-Nitrophenyl, bevorzugt 4-Fluorphenyl, 4-Chlorphenyl, 3-Chlorphenyl, 3,5-Dichlorphenyl, 3-Trifluormethylphenyl, 4-Trifluormethylphenyl. Im Rahmen einer bevorzugten Ausführungsform sind die Reste Ar¹, Ar², Ar³, Ar⁴ gleich und bedeuten bevorzugt 4-Fluorphenyl, 4-Chlorphenyl, 3-Chlorphenyl, 3,5-Dichlorphenyl, 3-Trifluormethylphenyl, 4-Trifluormethylphenyl, insbesondere bevorzugt Phenyl.

Die zu den jeweiligen phenolischen Hydroxygruppen meta- oder para-ständigen Substituenten R¹, R², R³, R⁴ können erfindungsgemäß gleich oder verschieden, bevorzugt gleich, sein und jeweils unabhängig voneinander Wasserstoff und/oder wie vorstehend genanntes C₁- bis C₆-Alkyl, C₁- bis C₆-Perfluoralkyl, C₁- bis C₆-Alkoxy, C₇- bis C₁₂-Aralkyl, Halogen, -SiR^{5b}R^{6b}, R^{7b}, substituiertes oder unsubstituiertes C₆- bis C₁₀-Aryl, - NR^{8b}R^{9b}, -SR^{10b}und/oder -NO₂ bedeuten.

Als bevorzugte Reste R¹, R², R³, R⁴ seien genannt: Methyl, Ethyl, Isopropyl, Halogen, insbesondere Fluor und/oder Chlor, Trifluormethyl, Phenyl, Methoxy, Nitro. Bevorzugt sind die Reste R¹, R², R³, R⁴ gleich und bedeuten insbesondere bevorzugt Wasserstoff.

Die Reste R¹ oder R² und/oder R³ oder R⁴ können gemeinsam mit dem Strukturelement A auch einen cyclischen aromatischen oder nicht-aromatischen Cyclus bilden. In diesen Fällen weisen die erfindungsgemäß einzusetzenden Bis(diarylphenol)-Liganden der Formel (I) ein tricyclisches Grundgerüst, beispielweise ein Anthracen-Grundgerüst der Formel (X) oder Grundgerüste des Typs (XI) auf:

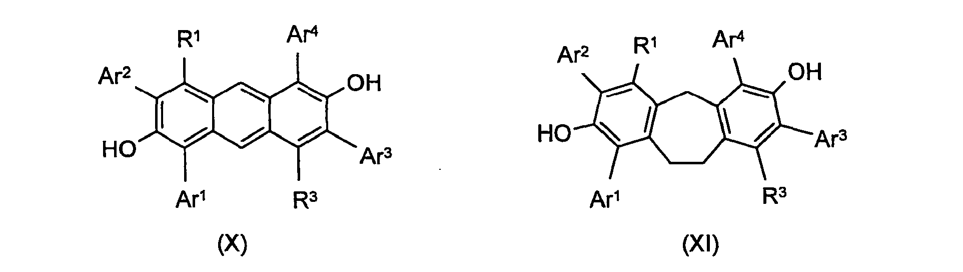

Weitere strukturelle Abwandlungen dieser tricyclischen Grundgerüste, gegebenenfalls auch solchen, die Heteroatome im Grundgerüst aufweisen, erschließen sich dem Fachmann und gehören zur Gruppe der erfindungsgemäß einsetzbarenBis(diarylphenol)-Liganden.

Das Strukturelement A in Formel (I) kann für einen geradkettigen oder verzweigten und/oder cyclischen Kohlenwasserstoffrest mit 1 bis 25 Kohlenstoffatomen stehen, der gesättigt oder ein- oder mehrfach ungesättigt, normalerweise 1 bis etwa 6-fach ungesättigt sein kann und/oder teilweise aromatisch sein kann. Die genannten Kohlenwasserstoffreste können gegebenenfalls eines oder mehrere, in der Regel 1 bis 3, gleiche oder verschiedene Heteroatome, ausgewählt aus der Gruppe der Heteroatome O, S und NR¹¹ und/oder eine oder mehrere gleiche oder verschiedene funktionelle Gruppen, ausgewählt aus der Gruppe der funktionellen Gruppen C(O), S(O) und S(O)₂, aufweisen und gegebenenfalls einen oder mehrere gleiche oder verschiedene Substituenten, ausgewählt aus der Gruppe der Substituenten C₁- bis C₆-Alkyl, C₁- bis C₆-Perfluoralkyl, C₁- bis C₆-Alkoxy, C₁- bis C₁₀- Acyloxy, C₇- bis C₁₂-Aralkyl, Halogen, - SiR^{5c}R^{6c}R^{7c}, substituiertes oder unsubstituiertes C₆- bis C₁₀-Aryl, substituiertes oder unsubstituiertes C₂- bis C₁₀-Hetaryl, -NR^{8c}R^{9c}, -SR^{10c}, -NO₂, C₁-bis C₁₂-Acyl und C₁- bis C₁₀- Carboxyl tragen.

Bevorzugt steht das Strukturelement A in Formel (I) für einen geradkettigen oder verzweigten und/oder cyclischen Kohlenwasserstoffrest mit 1 bis 25, bevorzugt 1 bis 15, und besonders bevorzugt 1 bis 10 Kohlenstoffatomen , der gesättigt oder ein- bis dreifach ungesättigt sein kann und/oder teilweise aromatisch sein kann. Die bevorzugten Kohlenwasserstoffreste können gegebenenfalls eines oder mehrere, in der Regel 1 bis 3, gleiche oder verschiedene Heteroatome, ausgewählt aus der Gruppe der Heteroatome O, S und NR¹¹ und/oder eine oder mehrere C(O)- Gruppen aufweisen und gegebenenfalls einen oder mehrere gleiche oder verschiedene Substituenten, ausgewählt aus der Gruppe der Substituenten C₁- bis C₆-Alkyl, C₁- bis C₆-Perfluoralkyl, C₁- bis C₆-Alkoxy, C₁- bis C₁₀- Acyloxy, C₇- bis C₁₂-Aralkyl, Halogen, substituiertes oder unsubstituiertes C₆- bis C₁₀-Aryl, -NO₂, C₁-bis C₁₂-Acyl und C₁- bis C₁₀- Carboxyl tragen.

Als Beispiele für Strukturelemente A in der Formel (I) seien ohne jeden einschränkenden Charakter die folgenden Strukturelemente 1 bis 44 genannt, wobei die Schlangenlinien jeweils, wie im Rahmen der gesamten vorliegenden Offenbarung, die Anknüpfungsstellen zum Rest der jeweiligen Ligandenstruktur markieren:

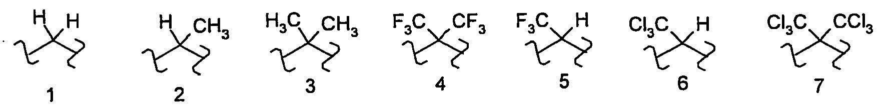

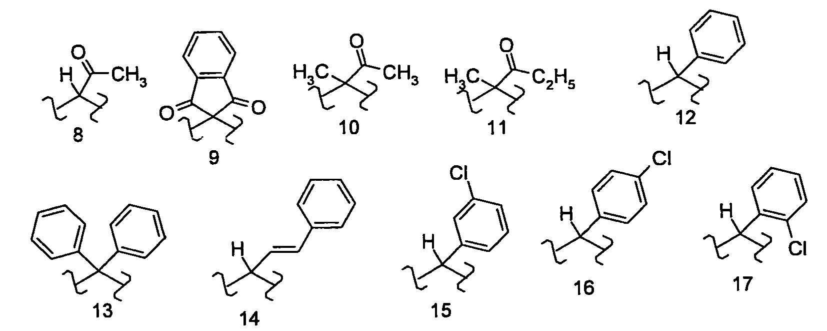

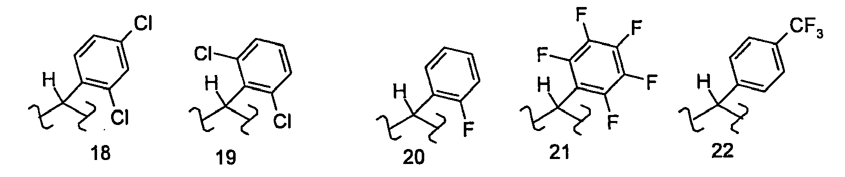

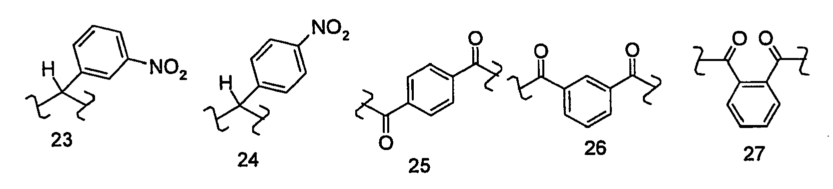

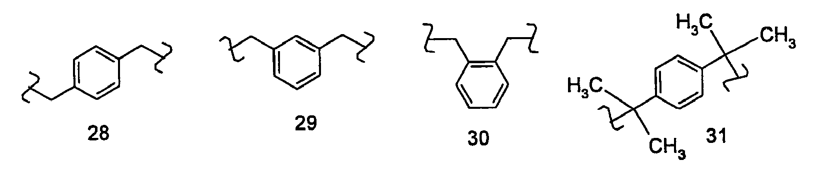

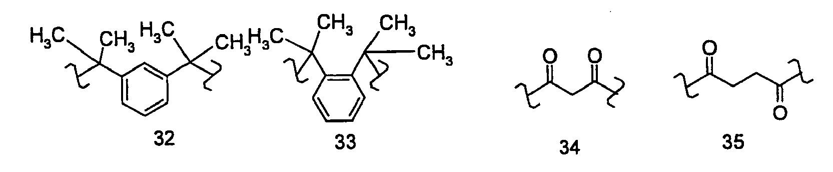

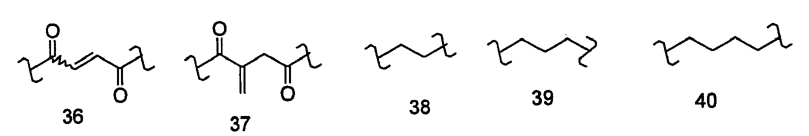

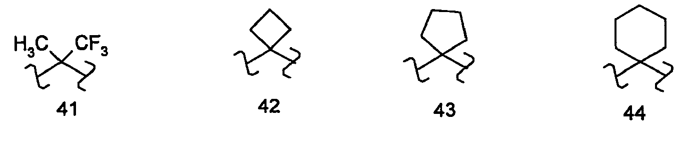

Auch die dargestellten Strukturelemente 1 bis 44 können jeweils die wie vorstehend bezeichneten Substituenten tragen und gegebenenfalls weitere, normalerweise 1 oder 2 ethylenische Doppelbindungen aufweisen.

Das Strukturelement A kann auch für einen Arylrest mit 6 bis 15, bevorzugt 6 bis 10 Kohlenstoffatomen, speziell einen Phenylen-, Naphthylen- oder Anthracenylenrest stehen oder für einen wie vorstehend definierten Heteroarylrest mit 2 bis 15, bevorzugt 3 bis 10 Kohlenstoffatomen stehen.

Die genannten Aryl- bzw. Heteroarylreste können gegebenenfalls jeweils 1 bis 5 Substituenten tragen, die ausgewählt sind aus der Gruppe der wie vorstehend beschriebenen Substituenten C₁- bis C₆-Alkyl, C₁- bis C₆-Perfluoralkyl, C₁- bis C₆-Alkoxy, C₇- bis C₁₂-Aralkyl, Halogen, -SiR^{5d}R^{6d}, R^{7d}, substituiertes oder unsubstituiertes C₆- bis C₁₀-Aryl, -NR^{8d}R^{9d}, SR^{10d} und NO₂.

Des weiteren kann das Strukturelement A auch für eine funktionelle Gruppe oder ein Heteroatom stehen, die ausgewählt sind aus der Gruppe -O-, -S-, -N(R¹¹)-, -S(O)-, - C(O)-, -S(O)₂-, -P(R¹¹)-, -(R¹¹)P(O)-, -OP(O)O-, -OP(O)₂O- und -Si(R¹²)(R¹³)-, wobei die Reste R¹¹, R¹², R¹³ unabhängig voneinander jeweils für wie vorstehend beschriebenes C₁- bis C₆-Alkyl, C₇- bis C₁₂-Aralkyl und/oder substituiertes oder unsubstituiertes C₆- bis C₁₀-Aryl stehen. Im Rahmen dieser Gruppe steht das Strukturelement A bevorzugt für -O-, -S-, -S(O)-, S(O)₂- oder -Si(R¹²)(R¹³)-.

Im Rahmen der vorliegenden Erfindung bevorzugte Diarylphenoxy-Aluminium-Verbindungen sind solche, die erhältlich sind durch Umsetzung von Bis(diarylphenol)-Liganden der Formel (la) 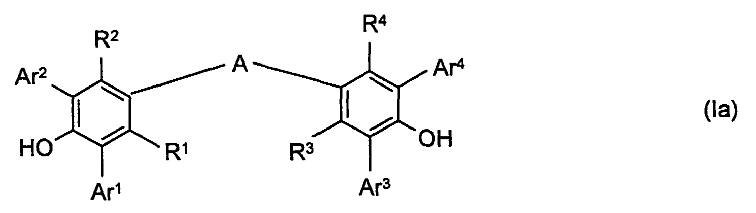 mit einer Aluminium-Verbindung der Formel (II) und/oder (III).

Die Liganden der Formel (la) weisen ebenfalls zwei Phenolsysteme auf, die jeweils in beiden ortho-Positionen zur phenolischen Hydroxy-Gruppe durch Aromaten bzw. Heteroaromaten (Ar¹ bis Ar⁴) substituiert sind und über ein Strukturelement A miteinander verknüpft sind und gegebenenfalls noch weitere Substituenten (R¹ bis R⁴) tragen können, wobei das Strukturelement A jeweils in para-Position zur phenolischen Hydroxy-Gruppe mit den beiden Phenolsystemen verknüpft ist. Dabei können den Resten Ar¹, Ar², Ar³, Ar⁴, den Resten R¹, R², R³, R⁴ und dem Strukturelement A die gleichen Bedeutungen zukommen wie vorstehend für Formel (I) genannt.

Insbesondere bevorzugte Liganden sind erfindungsgemäß solche, bei denen die Arylreste Ar¹, Ar², Ar³ und Ar⁴ gleich sind und die vorstehend für Formel (I) angegebenen bevorzugten Bedeutungen besitzen. Insbesondere bevorzugt als Arylreste Ar¹ bis Ar⁴ sind Phenyl, Naphthyl, 4-Fluorphenyl, 4-Chlorphenyl, 3-Chlorphenyl, 3,5-Dichlorphenyl, 4-Methylphenyl, 3-Trifluormethylphenyl, 4-Trifluormethylphenyl, ganz besonders bevorzugt Phenyl.

Bei den erfindungsgemäß bevorzugten Liganden der Formel (la) sind die Reste R¹, R², R³, R⁴ gleich oder verschieden, bevorzugt gleich, und bedeuten vorzugsweise: Wasserstoff, Halogen, insbesondere Fluor oder Chlor, Methyl, Trifluormethyl, Isopropyl, tert-Butyl, Phenyl, Nitro.

Dem Strukturelement A in Formel (Ia) kommen die vorstehend für Formel (I) genannten Bedeutungen zu. Bevorzugte Strukturelemente A in Formel (la) sind insbesondere auch die Strukturelemente 1 bis 44, die in der genannten Weise substituiert sein können.

Insbesondere bevorzugte Liganden sind solche der Formeln (Ia₁) bis (Ia₃), wobei den genannten Resten Ar¹ bis Ar⁴, R¹ bis R⁴ und R¹⁵ bis R¹⁸ bevorzugt die tabellarisch beispielhaft aufgeführten Bedeutungen zukommen:

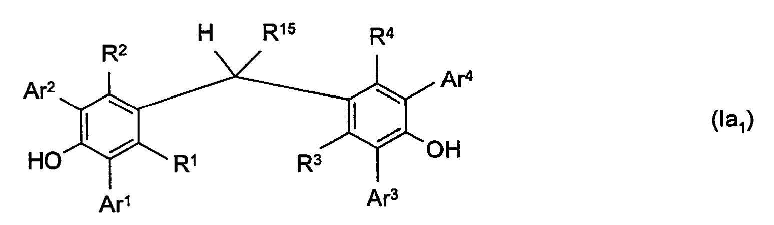

**Tabelle 1:**

| Verbindung | Ar¹ | Ar² | Ar³ | Ar⁴ | R¹ | R² | R³ | R⁴ | R¹⁵ |
|---|---|---|---|---|---|---|---|---|---|
| Ia₁-1 | Ph | Ph | Ph | Ph | H | H | H | H | H |
| Ia₁-2 | Ph | Ph | Ph | Ph | H | H | H | H | CH₃ |
| Ia₁-3 | Ph | Ph | Ph | Ph | H | H | H | H | Ph |
| Ia₁-4 | Ph | Ph | Ph | Ph | H | H | H | H | CF₃ |
| Ia₁-5 | Ph | Ph | Ph | Ph | H | H | H | H | CCl₃ |
| Ia₁-6 | Ph | Ph | Ph | Ph | H | H | H | H | 4-Cl-Ph |
| Ia₁-7 | Ph | Ph | Ph | Ph | H | H | H | H | CH₂CH₃ |
| Ia₁-8 | Ph | Ph | Ph | Ph | H | H | H | H | 3-NO₂-Ph |
| Ia₁-9 | Ph | Ph | Ph | Ph | H | H | H | H | 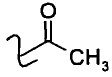 |

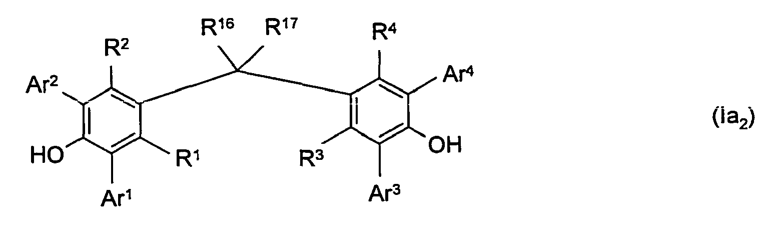

**Tabelle 2:**

| Verbindung | Ar¹ | Ar² | Ar³ | Ar⁴ | R¹ | R² | R³ | R⁴ | R¹⁶ | R¹⁷ |
|---|---|---|---|---|---|---|---|---|---|---|
| Ia₂-1 | Ph | Ph | Ph | Ph | H | H | H | H | CF₃ | CF₃ |
| Ia₂-2 | Ph | Ph | Ph | Ph | H | H | H | H | CCl₃ | CCl₃ |
| Ia₂-3 | Ph | Ph | Ph | Ph | H | H | H | H | CH₃ | CF₃ |
| Ia₂-4 | Ph | Ph | Ph | Ph | H | H | H | H | CH₃ | CCl₃ |
| Ia₂-5 | Ph | Ph | Ph | Ph | H | H | H | H | CH₂CH₃ | CF₃ |
| Ia₂-6 | Ph | Ph | Ph | Ph | H | H | H | H | CH₃ | CH₃ |
| Ia₂-7 | Ph | Ph | Ph | Ph | H | H | H | H | CH₃ | C(O)OCH₃ |
| Ia₂-8 | Ph | Ph | Ph | Ph | H | H | H | H | CH₃ | C(O)OC₂H₅ |
| Ia₂-9 | Ph | Ph | Ph | Ph | H | H | H | H | -(CH₂)₃- | |
| Ia₂-10 | Ph | Ph | Ph | Ph | H | H | H | H | -(CH₂)₄- | |
| Ia₂-11 | Ph | Ph | Ph | Ph | H | H | H | H | -(CH₂)₅- | |

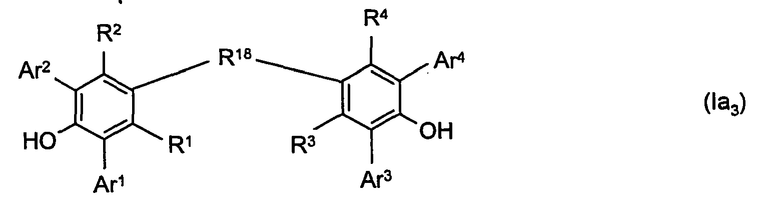

**Tabelle 3:**

| Verbindung | Ar¹ | Ar² | Ar³ | Ar⁴ | R¹ | R² | R³ | R⁴ | R¹⁸ |
|---|---|---|---|---|---|---|---|---|---|
| Ia₃-1 | Ph | Ph | Ph | Ph | H | H | H | H | -CH₂)₂- |
| Ia₃-2 | Ph | Ph | Ph | Ph | H | H | H | H | 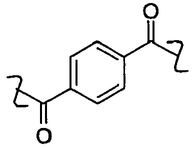 |
| Ia₃-3 | Ph | Ph | Ph | Ph | H | H | H | H | 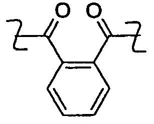 |
| Ia₃-4 | Ph | Ph | Ph | Ph | H | H | H | H | 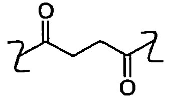 |
| Ia₃-5 | Ph | Ph | Ph | Ph | H | H | H | H | 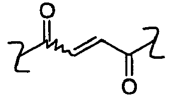 |
| Ia₃-6 | Ph | Ph | Ph | Ph | H | H | H | H | 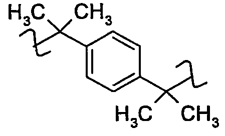 |
| Ia₃-7 | Ph | Ph | Ph | Ph | H | H | H | H | 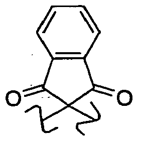 |

Dabei bedeutet in den Tabellen 1-3 Ph einen Phenylrest und C(O) bedeutet wie im Rahmen der gesamten vorliegenden Erfindung eine Carbonylgruppe. Generell können die Reste R¹⁵, R¹⁶ und R¹⁷ unabhängig voneinander für wie vorstehend definiertes C₁- bis C₆-Alkyl, C₁- bis C₁₀-Acyl, C₁- bis C₁₀-Carboxyl oder C₆- bis C₁₀-Aryl stehen, wobei die genannten Reste einen oder mehrere gleiche oder verschiedene Halogen- und/oder NO₂-Substituenten tragen können und wobei die Reste R¹⁶und R¹⁷ gemeinsam auch ein cyclisches Strukturelement, bevorzugt eine Alkylenbrücke bilden können.

Die zur Herstellung der erfindungsgemäßen Diarylphenoxy-Aluminium-Verbindungen einsetzbaren Bis(diarylphenol)-Liganden der Formeln (I) bzw. (Ia) lassen sich durch dem Fachmann an sich bekannte Methoden leicht herstellen. Verbindungen des Strukturtyps (Ia₁) erhält man beispielsweise durch Umsetzung der entsprechenden bis-ortho-Arylphenole mit einem Aldehyd R¹⁵CHO in Gegenwart einer Lewis-Säure, beispielsweise AlCl₃, wie u.a. beschrieben von Z. Y. Wang, A. S. Hay in Synthesis 1989, 471-472 oder in der US 3,739,035. Liganden des Strukturtyps (Ia₂) sind beispielsweise zugänglich durch Umsetzung der entsprechenden bis-ortho-Arylphenole mit einem geeigneten Keton der Formel R¹⁶C(O)R¹⁷, wie beispielsweise in der US 3,739,035 beschrieben. Liganden des Strukturtyps (Ia₃) sind beispielsweise zugänglich durch Friedel-Crafts Acylierung der entsprechenden Phenole oder O-geschützten Phenole mit Dicarbonsäurechloriden wie beispielsweise von F. F. Blicke et al. in J. Am. Chem. Soc. 1938, 60, 2283-2285; der CH 350461 oder von G. Maier et al. in Chem. Ber. 1985, 118, 704-721 beschrieben. Eine weitere Möglichkeit zur herstellung von Liganden des Strukturtyps (Ia₃) besteht auch in der Friedel-Crafts-Alkylierung der entsprechenden Phenole mit tertiären Diolen, wie beispielsweise in DE-A 25 34 558 beschrieben oder mit Dihalogeniden, wie beispielsweise von J. Zavada, in Collect. Czech. Chem. Commun, 1976, 41, 1777-1790, beschrieben.

Die erfindungsgemäßen Diarylphenoxy-Aluminium-Verbindungen erhält man beispielsweise, indem man die vorstehend beschriebenen Bis(diarylphenol)-Liganden der Formeln (I) bzw. (Ia) mit einer Aluminium-Verbindung der Formel (II)

(R¹⁴)₃₋ₚAlHₚ (II),

umsetzt. Dabei steht R¹⁴ für einen verzweigten oder unverzweigten Alkylrest mit 1 bis 5 Kohlenstoffatomen wie beispielsweise Methyl, Ethyl, Propyl, Isopropyl, Butyl, Isobutyl, Pentyl, Isopentyl oder Neopentyl. Der Index p steht für 0 oder eine ganze Zahl von 1 bis 3. Bevorzugt steht der Index p für 1 oder 0, besonders bevorzugt für 0. Bevorzugte Verbindungen der Formel (II) sind beispielsweise Trimethylaluminium, Triethylaluminium, Diisobutylaluminiumhydrid, besonders bevorzugt Trimethylaluminium und Triethylaluminium.

Alternativ dazu erhält man die erfindungsgemäßen Diarylphenoxy-Aluminium-Verbindungen auch durch Umsetzung der wie vorstehend beschriebenen Bis(diarylphenol)-Liganden der Formeln (I) bzw. (Ia) mit einer Aluminium-Verbindung der Formel (III)

MAlH₄ (III),

wobei M Lithium, Natrium oder Kalium bedeutet. Demzufolge eignen sich zur Herstellung der erfindungsgemäßen Diarylphenoxy-Aluminium-Verbindungen durch Umsetzung der wie vorstehend beschriebenen Bis(diarylphenol)-Liganden der Formeln (I) bzw. (Ia) auch Lithiumaluminiumhydrid, Natriumaluminiumhydrid und Kaliumaluminiumhydrid sowie Gemische derselben. Darüber hinaus sind auch Gemische der genannten Verbindungen der Formeln (II) und (III) zur Herstellung erfindungsgemäßen Diarylphenoxy-Aluminium-Verbindungen durch Umsetzung mit den wie vorstehend beschriebenen Bis(diarylphenol)-Liganden der Formeln (I) bzw. (Ia) geeignet.

Die Umsetzung wird vorteilhaft so durchgeführt, dass einer der wie vorstehend beschriebenen Bis(diarylphenol)-Liganden der Formeln (I) bzw. (Ia) mit einer Verbindung der Formel (II) oder (III) in Kontakt gebracht wird. Vorteilhaft führt man die Umsetzung in einem inerten organischen Lösungsmittel wie beispielsweise Toluol, Cyclohexan, Dichlormethan, Xylol, Ethylbenzol, Chlorbenzol, Tetrahydrofuran, Diethylether, Methyltert-Butylether, Essigsäureethylester, Pentan, Hexan, Dichlorethan, Dimethylformamid (DMF), Dimethylsulfoxid (DMSO) und dergleichen mehr durch, wobei der Einsatz vorgetrockneter bzw. wasserfreier Lösungsmittel als besonders vorteilhaft anzusehen ist. Üblicherweise erfolgt die Umsetzung bei Temperaturen im Bereich von etwa -100°C bis etwa 100°C, bevorzugt bei etwa -50°C bis etwa 50°C, besonders bevorzugt bei etwa -30°C bis etwa 30°C.

Bei der Herstellung der erfindungsgemäßen Diarylphenoxy-Aluminium-Verbindungen reagieren die phenolischen Hydroxy-Gruppen der eingesetzten Bis(diarylphenol)-Liganden der Formeln (I) bzw. (Ia) mit der bzw. den Verbindungen der Formeln (II) und (III). Theoretisch kann jedes Aluminium-Atom mit 1 bis 3 phenolischen Hydroxy-Gruppen regieren. Aufgrund der sterischen Eigenschaften bzw. Anforderungen der eingesetzten Bis(diarylphenol)-Liganden der Formeln (I) bzw. (Ia) kann es dabei zur Ausbildung höhermolekularer Strukturen wie linearen Strukturen oder Netzwerken kommen.

Vorteilhaft wählt man dabei das molare Verhältnis der eingesetzten Bis(diarylphenol)-Liganden der Formeln (I) bzw. (Ia) zu den eingesetzten Verbindungen der Formel (II) und/oder (III) so, dass die Menge an nicht abreagierten Verbindungen der Formeln (II) und/oder (III) möglichst gering ist. Vorzugsweise wählt man das genannte Verhältnis so, dass nach dem Inkontaktbringen der Bis(diarylphenol)-Liganden der Formeln (I) bzw. (Ia) mit der bzw. den Verbindungen der Formeln (II) und (III) keine nicht umgesetzte Verbindung der Formel (II) und/oder (III) mehr vorliegt. Unter Berücksichtigung des wirtschaftlichen Aspekts ist es empfehlenswert, den Überschuss der eingesetzten Liganden der Formeln (I) bzw. (Ia) gering zu halten. Besonders bevorzugt setzt man Bis(diarylphenol)-Liganden der Formeln (I) bzw. (Ia) und die Verbindungen der Formeln (II) und/oder (III) in einem molaren Verhältnis von etwa 4:1 bis etwa 1:1, ganz besonders bevorzugt von etwa 3:1 bis etwa 1,5:1 und am meisten bevorzugt im molaren Verhältnis von etwa 1,5:1 ein.

Zur Herstellung der erfindungsgemäßen Diarylphenoxy-Aluminium-Verbindungen geht man im Rahmen einer bevorzugten Ausführungsform der vorliegenden Erfindung so vor, das man, je nach Löslichkeit, eine etwa 0,001 bis etwa 1 molare Lösung des gewählten Liganden der Formel (I) bzw. (Ia) in einem geeigneten organischen Lösungsmittel, beispielsweise Toluol, bei einer Temperatur von etwa -10 bis etwa 30°C vorlegt und eine Aluminiumverbindung der Formel (II) und/oder (III), vorzugsweise in Form einer Lösung, beispielsweise eine Lösung von Trimethyl- oder Triethylaluminium in Toluol, zugibt.

Die Reaktion zwischen den eingesetzten Liganden der Formel (I) bzw. (la) und den Aluminiumverbindungen der Formeln (II) und/oder (III) erfolgt in der Regel rasch und ist meist, in Abhängigkeit von den gewählten Reaktionsbedingungen, nach etwa 10 min bis etwa 2 h, oft nach etwa 1 h abgeschlossen. Bei Einsatz reaktionsträgerer Reaktanten kann es vorteilhaft sein, die Temperatur des Reaktionsgemisches kurzzeitig zu erhöhen.

In Abhängigkeit von den gewählten Reaktionsbedingungen, insbesondere im Hinblick auf die Löslichkeit der umzusetzenden Liganden der Formel (I) bzw. (la) und der Aluminiumverbindung der Formel (II) und/oder (III) in den gewählten Lösungsmitteln, den Konzentrationen sowie den Reaktionstemperaturen erhält man die erfindungsgemäßen Diarylphenoxy-Aluminium-Verbindungen in Form eines Feststoffes, einer Suspension oder einer Lösung im eingesetzten Lösungsmittel bzw. Lösungsmittelgemisch. Die so erhaltenen erfindungsgemäßen Diarylphenoxy-Aluminium-Verbindungen können in der jeweils erhaltenen Form weiterverwendet werden oder abgetrennt und von den eingesetzten Lösungsmittel befreit werden.

Die Isolierung kann dabei nach dem Fachmann bekannten und vorteilhaft erscheinenden Methoden erfolgen. Vorzugsweise führt man die Isolierung, Lagerung bzw. Weiterbehandlung der erfindungsgemäßen Diarylphenoxy-Aluminium-Verbindungen unter weitgehendem Ausschluss von Sauerstoff und Feuchtigkeit durch.

Die erfindungsgemäßen Diarylphenoxy-Aluminium-Verbindungen eignen sich in besonderem Maße als Katalysatoren zur Durchführung chemischer Reaktionen, speziell von Reaktionen bzw. Umsetzungen organischer Verbindungen. Ein weiterer Aspekt der vorliegenden Erfindung betrifft demnach die Verwendung der erfindungsgemäßen, durch Umsetzung der Bis(diarylphenol)-Liganden der Formeln (I) bzw. (la) mit den Verbindungen der Formels (II) und/oder (III) erhältlichen Diarylphenoxy-Aluminium-Verbindungen als Katalysatoren. Die erfindungsgemäßen Diarylphenoxy-Aluminium-Verbindungen eignen sich insbesondere als Katalysatoren zur Durchführung von Reaktionen, die durch Säuren oder Lewis-Säuren katalysiert werden können. Beispielhaft und ohne jeden einschränkenden Charakter seien dafür die folgenden Reaktionstypen angegeben: Umlagerungen, Isomerisierungen, Cyclisierungen, Eliminierungen, dearomatisierende nucleophile Funktionalisierung von aromatische Carbonylverbindungen, konjugierte Addition an α,β-ungesättigte Carbonylverbindungen, Diels-Alder-Reaktionen.

Die genannten Reaktionen führt man vorteilhaft unter möglichst trockenen, aprotischen Bedingungen und unter möglichst weitgehendem Ausschluss von Sauerstoff durch.

Nach erfolgter Umsetzung können die eingesetzten Diarylphenoxy-Aluminium-Verbindungen mit üblichen Trennverfahren (z. B. durch Filtration, Zentrifugation) zumindest teilweise aus der Reaktionsmischung isoliert und anschließend wieder eingesetzt werden. Alternativ lassen sich aber auch die Bis(diarylphenol)-Liganden der Formeln (I) bzw. (Ia) leicht aus dem rohen oder bereits aufgearbeiteten Reaktionsgemisch, gegebenenfalls auch nach Abtrennung von Reaktionsprodukten bzw. Nebenprodukten wiedergewinnen, da sie in der Regel vorteilhaft physikalisch Elgenschaften wie beispielsweise eine gute Kristallisationsfähigkeit aufweisen.

In besonderem Maße eignen sich die erfindungsgemäßen Diarylphenoxy-Aluminium-Verbindungen als Katalysatoren zur Durchführung intramolekularer Reaktionen, insbesondere zur Durchführung von Cyclisierungsreaktionen.

Erfindungsgemäß insbesondere bevorzugt ist die Verwendung der erfindungsgemäßen Diarylphenoxy-Aluminium-Verbindungen als Katalysatoren zur Cyclisierung von racemischem oder nicht-racemischem Citronellal zu racemischem oder nicht-racemischem Isopulegol. Dabei sind erfindungsgemäß insbesondere die Diarylphenoxy-Aluminium-Verbindungen bevorzugt, die durch Umsetzung von Bis(diarylphenol)-Liganden der Formeln (Ia) mit einer Aluminium-Verbindung der Formel (II) und/oder (III) erhältlich sind. Ganz besonders bevorzugt ist die Verwendung von Diarylphenoxy-Aluminium-Verbindungen, die erhältlich sind durch Umsetzung von Bis(diarylphenol)-Liganden der Formeln (Ia₁) bis (Ia₃) als Katalysatoren zur Cyclisierung von Citronellal zu Isopulegol.

Die vorliegende Erfindung betrifft demgemäss auch ein Verfahren zur Herstellung von Isopulegol der Formel (IV) 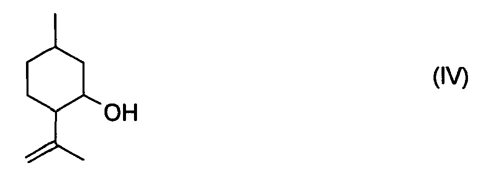 umfassend die Cyclisierung von Citronellal der Formel (V) 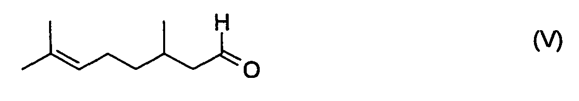 in Gegenwart eines Katalysators, der erhältlich ist durch Umsetzung eines Bis(diarylphenol)-Liganden der Formel (I) 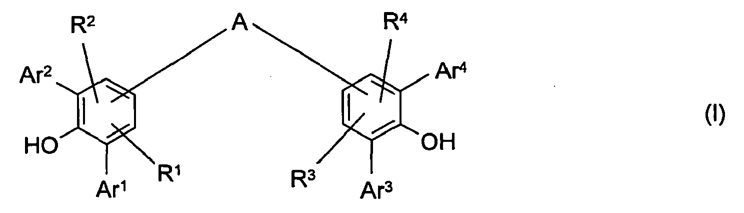 wobei
Ar¹, Ar², Ar³, Ar⁴, R¹, R², R³, R⁴ und A die vorstehend für Formel (I) angegebenen Bedeutungen besitzen
mit einer Aluminium-Verbindung der Formel (II)

(R¹⁴)₃₋ₚAlHₚ (II),

wobei
AI Aluminium bedeutet und
R¹⁴ einen verzweigten oder unverzweigten Alkylrest mit 1 bis 5 Kohlenstoffatomen und
p 0 oder eine ganze Zahl von 1 bis 3 bedeutet,
und/oder
mit einer Aluminium-Verbindung der Formel (III)

MAIH₄ (III),

wobei
AI Aluminium bedeutet und
M Lithium, Natrium oder Kalium bedeutet.

Das Verfahren eignet sich auch zur Herstellung von optisch aktivem Isopulegol der Formel (IVa) 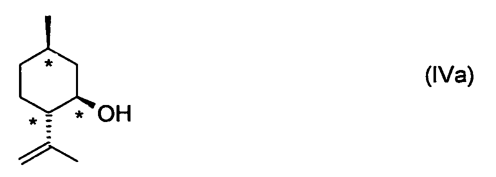 umfassend die Cyclisierung von optisch aktivem Citronellal der Formel (Va) 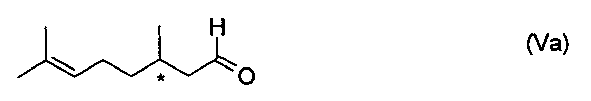 wobei (*) jeweils ein asymmetrisches Kohlenstoffatom bezeichnet.

Insbesondere bevorzugt eignet sich das erfindungsgemäße Verfahren zur Herstellung L-(-)-Isopulegeol durch Cyclisierung von D-(+)-Citronellal.

Im Rahmen des erfindungsgemäßen Verfahrens bevorzugte Katalysatoren sind solche, die erhältlich sind durch Umsetzung von Bis(diarylphenol)-Liganden der Formel (la) 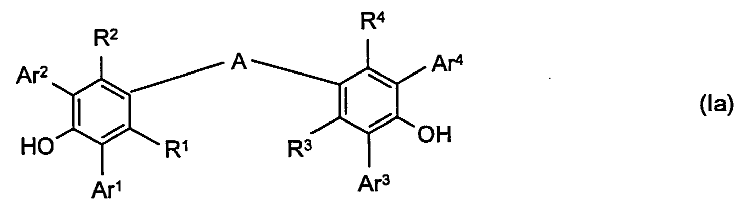 wobei die Reste Ar¹, Ar², Ar³, Ar⁴, R¹, R², R³, R⁴ und A die vorstehend für Formel (la) angegebenen Bedeutungen besitzen. Darunter wiederum bevorzugt sind die wie vorstehend beschriebenen Liganden der Formeln (Ia₁) bis (Ia₃). Im Rahmen des erfindungsgemäßen Verfahrens ganz besonders bevorzugte Liganden sind die Verbindungen Ia₁-1, Ia₁-4 , Ia₁-5, Ia₂-1, und Ia₂-3.

Aus den genannten Liganden werden, wie vorstehend beschrieben, die erfindungsgemäßen Diarylphenoxy-Aluminium-Verbindungen durch Umsetzung mit einer Aluminium -Verbindung der Formel (II) und/oder (III), bevorzugt mit einer Aluminium-Verbindung der Formel (II) erhalten.

Zur Durchführung des erfindungsgemäßen Verfahrens zur Herstellung von Isopulegol geht man vorteilhaft so vor, dass man zunächst eine Lösung der erfindungsgemäßen Diarylphenoxy-Aluminium-Verbindungen in einem geeigneten Lösungsmittel wie vorstehend beschrieben bereitstellt. Dieser Lösung setzt man dann erfindungsgemäß das zu cyclisierende racemische oder nicht-racemische Citronellal zu. Das Citronellal kann dabei als solches oder in Form einer Lösung, vorteilhaft in einem der vorstehend genannten geeigneten Lösungsmittel zugegeben werden. Im Rahmen einer bevorzugten Ausführungsform des erfindungsgemäßen Verfahrens bereitet man zunächst eine Lösung des gewählten Liganden der Formeln (I) bzw. (Ia) in Toluol und setzt dann, vorteilhaft unter Rühren, die gewählte Aluminium-Verbindung der Formel (II) und/oder (III), bevorzugt Trimethyl- oder Triethylaluminium in toluolischer Lösung zu.

Als Ausgangsstoff zur Durchführung des erfindungsgemäßen Cyclisierungsverfahrens eignet sich Citronellal, das nach jedwedem Verfahren hergestellt sein kann. Bevorzugt setzt man Citronellal ein, das eine Reinheit von etwa 90 bis etwa 99,9 Gew.-%, besonders bevorzugt von etwa 95 bis etwa 99,9 Gew.-% aufweist.

Die Zugabe des zu cyclisierenden Citronellals erfolgt vorteilhaft bei Temperaturen im Bereich von etwa - 40°C bis etwa 40°C, bevorzugt im Bereich von etwa -20°C bis etwa 20°C. Dazu wird vorteilhaft die bereitete Lösung der erfindungsgemäßen Diarylphenoxy-Aluminium-Verbindung auf eine Temperatur in diesem Bereich, z.B. auf eine Temperatur im Bereich von -10°C bis 10°C abgekühlt und vorgekühltes Citronellal bzw. eine vorgekühlte Lösung von Citronellal zugegeben.

Die Zugabe des Citronellals bzw. der Lösung davon kann so vorgenommen werden, dass man entweder die gesamte Menge auf einmal zusetzt oder sie portionsweise oder auch kontinuierlich zur bereiteten Katalysatorlösung gibt. Als Lösungsmittel eignen sich wiederum die vorstehend genannten Lösungsmittel, insbesondere Toluol. Bevorzugt setzt man das zu cyclisierende Citronellal als solches, d.h. ohne weitern Zusatz von Lösungsmitteln ein. Bei Einsatz eines Lösungsmittels wird die gesamte Lösungsmittelmenge (für Katalysatorherstellung und zur Durchführung der Cyclisierungsreaktion) vorteilhaft so gewählt, dass das volumenbezogene Verhältnis von umzusetzendem Citronellal zum Lösungsmittel etwa 2:1 bis etwa 1:20, bevorzugt von etwa 1,5:1 bis etwa 1:10 beträgt.

Das Mengenverhältnis zwischen dem umzusetzendem Citronellal und der eingesetzten Menge der erfindungsgemäßen Diarylphenoxy-Aluminium-Verbindung wird durch die Menge der zur Herstellung derselben eingesetzten Verbindungen der Formel (I) bzw. (Ia) und der Formel (II) und/oder (III), also durch das Mengenverhältnis von eingesetztem Ligand zu eingesetzter Aluminium-Verbindung der Formel (II) und/oder (III) bestimmt.

Erfindungsgemäß wählt man die Menge von umzusetzendem Citronellal zur eingesetzten Menge an Aluminium-Verbindung der Formel (II) und/oder (III) so, dass das molare Verhältnis etwa 5:1 bis etwa 1000:1, bevorzugt etwa 10:1 bis etwa 500:1, besonders bevorzugt etwa 50:1 bis etwa 200:1 beträgt.

Unabhängig davon kann das Verhältnis zwischen eingesetztem Ligand der Formel (I) bzw. (Ia) und der eingesetzten Aluminium-Verbindung der Formel (II) und/oder (III) in den vorstehend zur Herstellung der erfindungsgemäßen Diarylphenoxy-Aluminium-Verbindung genannten Grenzen variiert werden.

Die erfindungsgemäße Cyclisierung von Citronallal zu Isopulegol erfolgt je nach Wahl der Reaktionspartner und Reaktionsbedingungen in der Regel rasch und ist üblicherweise nach etwa 0,5 bis etwa 10 h, oft nach etwa 5 h weitgehend abgeschlossen. Der Reaktionsfortschritt kann durch dem Fachmann an sich bekannte Methoden, beispielsweise durch chromatographische, speziell gaschromatographische Methoden oder auch HPLC-Methoden leicht verfolgt werden.

Unter Einsatz bestimmter Citronellal-Qualitäten (z.B bei vorhandenen Verunreinigungen des Citronellals mit Citronellol) bei der Herstellung von Isopulegol durch Cyclisierung von Citronellal in Gegenwart der vorstehend beschriebenen Diarylphenoxy-Aluminium-Verbindungen wurde gelegentlich beobachtet, dass dabei, insbesondere bei Umsetzungen im technischen Maßstab, eine unerwünschte Nebenreaktion in störendem Ausmaß stattfinden kann: Dabei handelt es sich um die Bildung von Citronellsäurecitronellylester der Formel (XII) 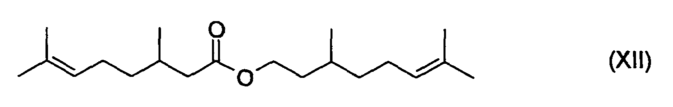 oder anderer hochsiedender Verunreinigungen, was bei den an die vorstehend genannte Reaktion zu stellenden hohen Anforderungen an Ausbeute, Selektivität und Stabilität eines in technischem Maßstab durchzuführenden Verfahrens nicht hingenommen werden kann.

Im Rahmen einer bevorzugten Ausführungsform des erfindungsgemäßen Verfahrens führt man die Cyclisierung von Citronellal zu Isopulegol in Gegenwart einer Säure, vorzugsweise einer organischen Säure durch. Beispielhaft seien als vorteilhaft einsetzbare organische Säuren genannt: Essigsäure, Propionsäure, Benzoesäure, Toluolsulfonsäure, Methansulfonsäure bevorzugt Essigsäure. Die genannten Säuren werden vorteilhaft in einer Menge von etwa 0,5 bis etwa 10 Gew.-%, bezogen auf die Menge an umzusetzendem Citronellal eingesetzt. Vorteilhaft werden sie zusammen mit dem Citronellal, z.B. in Form eines Gemisches dem Reaktionsgemisch zugesetzt.

In einer besonders bevorzugten Ausführungsform führt man das erfindungsgemäße Verfahren zur Herstellung von Isopulegol durch Cyclisierung von Citronellal in Gegenwart mindestens einer Verbindung durch, die ausgewählt ist aus der Gruppe der Carbonsäureanhydride, Aldehyde, Ketone und Vinylether.

Die Verbindungen der genannten Substanzklassen können jeweils einzeln oder in Form von Gemischen untereinander eingesetzt werden. Bevorzugt setzt man im Fall von Gemischen solche ein, die aus Verbindungen einer Substanzklasse bestehen. Besonders bevorzugt setzt man einzelne Verbindungen ein. Unter wie nachfolgend beschriebenem Einsatz der genannten Verbindungen gelingt es in der Regel, die Bildung des unerwünschten Nebenprodukts der Formel (XII) weitgehend zu unterdrücken.

Im Rahmen einer bevorzugten Ausführungsform führt man das erfindungsgemäße Cyclisierungsverfahren in Gegenwart eines Carbonsäureanhydrids der Formel (VI) 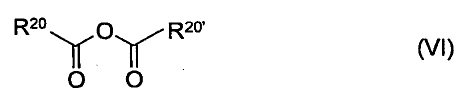 durch wobei die Reste R²⁰ und R^{20'} gleich oder verschieden, bevorzugt gleich, sein können und einen verzweigten oder unverzweigten C₁- bis C₁₂- Alkylrest oder C₇- bis C₁₂-Aralkylrest oder einen C₆- bis C₁₀-Arylrest bedeuten, wobei die genannten Reste jeweils einen oder mehrere, in der Regel 1 bis etwa 3, gleiche oder verschiedene Substituenten, ausgewählt aus der Gruppe OR^{10e}, SR^{10f} NR^{8e}R^{9e} und Halogen aufweisen können und wobei R²⁰ und R^{20'} gemeinsam auch einen 5- bis 8-gliedrigen Ring bilden können, der eine oder mehrere ethylenische Doppelbindungen und ein oder mehrere gleiche oder verschiedene Heteroatome, ausgewählt aus der Gruppe O, S und NR^{11b} aufweisen kann und wobei R^{10e}, R^{10f}, R^{8e}, R^{9e} und R^{11b} die vorstehend für R¹¹ angegebenen Bedeutungen haben können.

Im Rahmen einer weiteren bevorzugten Ausführungsform führt man das erfindungsgemäße Cyclisierungsverfahren in Gegenwart eines Aldehyds der Formel (VII) 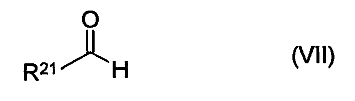 durch, wobei der Rest R²¹ einen verzweigten oder unverzweigten C₁- bis C₁₂- Alkylrest oder C₇- bis C₁₂-Aralkylrest oder einen C₆- bis C₁₀-Arylrest bedeutet, wobei die genannten Reste jeweils einen oder mehrere, bevorzugt 1 bis 3, gleiche oder verschiedene Substituenten, ausgewählt aus der Gruppe OR^{10e}, SR^{10f} NR^{8e}R^{9e} und Halogen aufweisen können, wobei R^{10e}, R^{10f}, R^{8e} und R^{9e}die vorstehend für R¹¹ angegebenen Bedeutungen haben können.

Im Rahmen einer weiteren bevorzugten Ausführungsform führt man das erfindungsgemäße Cyclisierungsverfahren in Gegenwart eines Ketons der Formel (VIII) 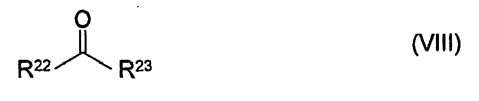 durch, wobei die Reste R²² und R²³ jeweils gleich oder verschieden sein können und einen verzweigten oder unverzweigten C₁- bis C₁₂- Alkylrest oder C₇- bis C₁₂-Aralkylrest oder einen C₆- bis C₁₀-Arylrest oder einen C₁- bis C₆-Alkoxycarbonylrest bedeuten, wobei die genannten Reste jeweils einen oder mehrere, bevorzugt 1 bis 3, gleiche oder verschiedene Substituenten, ausgewählt aus der Gruppe OR^{10e}, SR^{10f} NR^{8e}R^{9e} und Halogen aufweisen können, und wobei R²² und R²³ gemeinsam auch einen 5- bis 8-gliedrigen Ring bilden können, der eine oder mehrere ethylenische Doppelbindungen und ein oder mehrere gleiche oder verschiedene Heteroatome ausgewählt aus der Gruppe O, S, NR^{11b} aufweisen kann und wobei R^{10e}, R^{10f}, R^{8e}, R^{9e} und R^{11b} die vorstehend für R¹¹ angegebenen Bedeutungen haben können.

Alternativ zu den genannten Carbonylverbindungen lassen sich auch Vinylether der allgemeinenen Formel (IX) 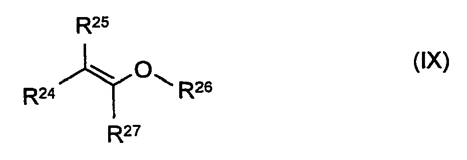 im Rahmen des erfindungsgemäßen Verfahrens einsetzen, wobei die Reste R²⁴, R²⁵, R²⁶ und R²⁷ unabhängig voneinander jeweils gleich oder verschieden sein können und einen verzweigten oder unverzweigten C₁- bis C₁₂- Alkylrest oder C₇- bis C₁₂-Aralkylrest oder einen C₆- bis C₁₀-Arylrest bedeuten, wobei die genannten Reste jeweils einen oder mehrere, bevorzugt 1 bis 3, gleiche oder verschiedene Substituenten, ausgewählt aus der Gruppe Oxo, OR^{10e}, SR^{10f} NR^{8e}R^{9e} und Halogen aufweisen können und wobei R²⁵ und R²⁶ gemeinsam auch einen 5- bis 8-gliedrigen Ring bilden können, der eine oder mehrere ethylenische Doppelbindungen und ein oder mehrere, üblicherweise 1 oder 2, gleiche oder verschiedene Heteroatome ausgewählt aus der Gruppe O, S, NR^{11b} aufweisen kann und wobei R^{10e}, R^{10f}, R^{8e}, R^{9e} und R^{11b} die vorstehend für R¹¹ angegebenen Bedeutungen haben können.

C₁- bis C₁₂- Alkyl steht dabei für wie vorstehend beschriebenes C₁- bis C₆-Alkyl und darüber hinaus beispielsweise für Heptyl, Octyl, Nonyl, Decyl, Undecyl oder Dodecyl. In den Fällen, in denen zwei Alkylreste gemeinsam einen Ring ausbilden, sind unter Alkylresten auch Alkylenylreste zu verstehen. C₇- bis C₁₂-Aralkylresten und C₆- bis C₁₀-Arylresten können beispielhaft die vorstehend genannten Bedeutungen zukommen. Beispielhaft seien als C₁- bis C₆-Alkoxycarbonylrest genannt: Methoxycarbonyl, Ethoxycarbonyl, Propoxycarbonyl und Isopropoxycarbonyl, bevorzugt Methoxycarbonyl und Ethoxycarbonyl.

Im Rahmen einer bevorzugten Ausführungsform führt man das erfindungsgemäße Cyclisierungsverfahren in Gegenwart eines Carbonsäureanhydrids der Formel (VI) durch, wobei die Reste R²⁰ und R^{20'} gleich sind and einen verzweigten oder unverzweigten C₁- bis C₁₂- Alkylrest oder C₇- bis C₁₂-Aralkylrest oder einen C₆- bis C₁₀-Arylrest bedeuten, und wobei R²⁰ und R^{20'} gemeinsam auch einen 5- bis 8-gliedrigen Ring bilden können, der eine oder mehrere ethylenische Doppelbindungen und ein oder mehrere gleiche oder verschiedene Heteroatome ausgewählt aus der Gruppe OR^{10e}, SR^{10f}, NR^{11b} aufweisen kann und R^{10e}, R^{10f} und R^{11b} unabhängig voneinander die vorstehend für R¹¹ angegebenen Bedeutungen haben kann.

Insbesondere bevorzugt setzt man solche Carbonsäureanhydride ein, bei denen die Reste R²⁰ und R^{20'} gleich sind und einen verzweigten oder unverzweigten C₁- bis C₁₂-Alkylrest oder einen C₆- bis C₁₀-Arylrest bedeuten. Beispielhaft seien als erfindungsgemäß besonders bevorzugt einzusetzende Carbonsäureanhydride genannt: Essigsäureanhydrid, Propionsäurealdehyd, Pivalinsäureanhydrid und Benzoesäureanhydrid.

Als erfindungsgemäß ebenfalls bevorzugt einsetzbare Aldehyde der Formel (VII) seien bespielhaft Acetaldeyhd, Propionaldehyd und Chloral (Trichloracetaldehyd) genannt.

Führt man das erfindungsgemäße Cyclisierungsverfahren im Rahmen einer weiteren bevorzugten Ausführungsform in Gegenwart eines Ketons der Formel (VIII) durch, setzt man mit Vorteil solche mit einer aktivierten, d.h. elektronenarmen Carbonylfunktion ein. Beispielhaft seien die folgenden Ketone genannten, die sich in besonderem Maße zum Einsatz im Rahmen des erfindungsgemäßen Verfahren eigenen: 1,1,1-Trifluoraceton, 1,1,1-Trifluoracetophenon, Hexafluoraceton, Brenztraubensäuremethylester und Brenztraubensäureethylester.

Als erfindungsgemäß ebenfalls bevorzugt einsetzbare Vinylether der Formel (IX) seien beispielhaft genannt: Methylvinylether, Ethylvinylether, Isobutylvinylether und 3,4-Dihydro-2H-pyran.

Die genannten Verbindungsklassen können gleichermaßen mit gutem Erfolg im Rahmen dieser bevorzugten Ausführungsform des erfindungsgemäßen Verfahrens eingesetzt werden. Im Hinblick auf praktische Gesichtspunkte wie beispielsweise eine höhere Reaktionsgeschwindigkeit hat sich der Einsatz von Aldehyden und/oder elektronenarmen Ketonen als vorteilhaft erweisen.

Die Menge an erfindungsgemäß einzusetzendem Carbonsäureanhydrid, Aldehyd, Keton und/oder Vinylether kann in breiten Grenzen variiert werden und richtet sich nach Art des eingesetzten Stoffes und dem Reinheitsgrad bzw. dem Vorhandensein noch nicht näher identifizierter Verunreinigungen. Üblicherweise setzt man die genannten Verbindungen bzw. deren Gemische in einer Menge von etwa 0,01 mol-% bis etwa 5 mol-%, bevorzugt von etwa 0,1 mol-% bis etwa 2 mol-% bezogen auf die eingesetzte Menge an Citronellal ein.

An die Art und Weise der Reaktionsführung, beispielsweise die Ausgestaltung von Reaktoren oder die Reihenfolge der Zugabe einzelner Reaktionspartner sind keine besonderen Anforderungen zu stellen, solange eine Reaktionsführung unter weitgehendem Ausschluss von Sauerstoff und Wasser gewährleistet ist.

Zur Durchführung des erfindungsgemäßen Verfahrens im Rahmen dieser bevorzugten Ausführungsform geht man vorteilhaft so vor, dass man zunächst eine Lösung der erfindungsgemäß einzusetzenden Diarylphenoxy-Aluminium-Verbindung in einem geeigneten Lösungsmittel wie vorstehend beschrieben bereitstellt. Dieser Lösung setzt man dann erfindungsgemäß bevorzugt ein Gemisch des zu cyclisierenden racemischen oder nicht-racemischen Citronellals mit dem gewählten Carbonsäureanhydrid, dem Aldehyd, dem aktivierten Keton und/oder dem Vinylether zu. Alternativ dazu kann man beispielsweise auch die Lösung der erfindungsgemäß einzusetzenden Diarylphenoxy-Aluminium-Verbindung zunächst mit dem gegebenfalls jeweils gewählten Carbonsäureanhydrid, dem Aldehyd, dem Keton und/oder dem Vinylether versetzen und im Anschluss daran das zu cyclisierende Citronellal zugeben.

Es sich als vorteilhaft erwiesen, das Citronellal bzw. das Gemisch von Citronellal mit der gewählten Verbindung innerhalb eines Zeitraums von etwa 30 min bis etwa 6 h, bevorzugt innerhalb von etwa 2 h bis etwa 4 h zur Katalysatorlösung bzw. dem Reaktionsgemisch zuzudosieren. Das Citronellal kann dabei als solches oder in Form einer Lösung, vorteilhaft in einem der vorstehend genannten geeigneten Lösungsmittel zugegeben werden. Im Rahmen einer wiederum bevorzugten Ausführungsform des erfindungsgemäßen Verfahrens bereitet man zunächst eine Lösung des gewählten Liganden der Formeln (I) bzw. (Ia) in Toluol und setzt dann, zweckmäßigerweise unter Rühren, die gewählte Aluminium-Verbindung der Formel (II) und/oder (III), bevorzugt Trimethyl- oder Triethylaluminium in toluolischer Lösung zu.

Die Zugabe des zu cyclisierenden Citronellals bzw. des Gemischs von Citronellal mit dem gewählten Carbonsäureanhydrid, Aldehyd, aktivierten Keton und/oder dem Vinylether erfolgt im Rahmen dieser Ausführungsform vorteilhaft bei Temperaturen im Bereich von etwa -40°C bis etwa 40°C, bevorzugt im Bereich von etwa -20°C bis etwa 20°C. Dazu wird vorteilhaft die bereitete Lösung oder Suspension der erfindungsgemäßen Diarylphenoxy-Aluminium-Verbindung auf eine Temperatur in diesem Bereich, z.B. auf eine Temperatur im Bereich von -10°C bis 10°C abgekühlt und die weiteren Reaktanden in vorgekühlter Form zugegeben.

Die Zugabe des Gemischs von Citronellals und der gewählten weiteren Verbindung kann so vorgenommen werden, dass man entweder die gesamte Menge Citronellal auf einmal zusetzt oder sie portionsweise oder auch kontinuierlich zur bereiteten Katalysatorlösung gibt. Als Lösungsmittel eignen sich wiederum bevorzugt die vorstehend genannten Lösungsmittel, insbesondere Toluol. Bevorzugt setzt man das zu cyclisierende Citronellal in Form eines Gemisches mit dem gewählten Carbonsäureanhydrid, Aldehyd, aktivierten Keton und/oder Vinylether ohne weiteren Zusatz von Lösungsmitteln ein. Bei Einsatz eines Lösungsmittels wählt man die gesamte Lösungsmittelmenge vorteilhaft so, dass das volumenbezogene Verhältnis von umzusetzendem Citronellal zum Lösungsmittel etwa 1:1 bis etwa 1:20, bevorzugt von etwa 1:1 bis etwa 1:10 beträgt.

Es wurde gefunden, dass üblicherweise während der Reaktion ein Teil des Katalysatorkomplexes deaktiviert wird. Dies ist unter anderem auf Ligandenaustausch-Prozesse zwischen den jeweils eingesetzten Bis(diarylphenol)-Liganden der Formel der eingesetzten Diarylphenoxy-Aluminium-Verbindungen und dem durch Cyclisierung entstehenden Isopulegol zurückzuführen. Die deaktivierte Form des Katalysators ist, in Abhängigkeit von der Wahl der eingesetzten Lösemittel, üblicherweise im Gegensatz zum aktiven polymeren Katalysator in der Reaktionsmischung löslich.

In einer bevorzugten Ausführungsform kann durch einfache physikalische Trennmethoden (z.B. durch Abfiltration oder Zentrifugation des noch aktiven Katalysators) der deaktiverte Teil des Katalysators zusammen mit der übrigen Reaktionsmischung abgetrennt werden. Der zurückgehaltene, immer noch aktive Teil des Katalysators kann gewünschtenfalls mit frischem Katalysator ergänzt werden und ohne nennenswerten Aktivitätsverlust wieder eingesetzt werden, vorzugsweise im Rahmen einer weiteren erfindungsgemäßen Cyclisierungsreaktion von Citronellal zu Isopulegol.

Alternativ kann die eingesetzte Katalysatormenge so gewählt werden, dass der gesamte eingesetzte Katalysatorkomplex im Laufe bzw. nach Beendigung der erfindungsgemäßen Cyclisierungsreaktion deaktiviert und somit löslich ist, wasan einer klaren Reaktionsmischung zu erkennen ist. Dabei macht sich vorteilhaft bemerkbar, das in diesem Falle aufgrund der vorstehend beschriebenen Ligandenaustausch-Prozesse der jeweils eingesetzte Bis-(diarylphenoxy)-Ligand der Formel (I) ohne gesondert durchzuführende Hydrolyse freigesetzt wird.

Es wurde darüber hinaus gefunden, dass nach der destillativen Entfernung des jeweils eingesetzten Lösungsmittels, bevorzugt des Toluols, sowie der gegebenenfalls eingestzten weiteren Verbindung das Cyclisierungsprodukt Isopulegol ohne vorherige Hydrolyse der jeweils eingesetzten Diarylphenoxy-Aluminium-Verbindugen in hohen Reinheiten aus der Reaktionsmischung abdestilliert werden kann. Dabei bilden sich auch im Destillationssumpf in der Regel keine erkennbaren unerwünschten oder störenden Nebenprodukte. Bei Zugabe eines geeigneten, inerten hochsiedenden Lösungsmittels, d.h. vorzugsweise eines Lösungsmittels, das einen höheren Siedepunkt als Isopulegol aufweist, wie beispielsweise 1-Methylnaphthalin, 1-Decanol, Tridecan, 1,2-Propylencarbonat, Diethylenglycoldibutylether, Tetraethylenglycoldimethylether und Dibenzylether, vor der Destillation erhält man im Destilltionssumpf eine Lösung des freien Liganden in dem heißen, jeweils eingesetzten Hochsieder. Durch einfaches Abkühlen kann der Ligand aus dieser heißen Lösung auskristallisiert werden und durch Filtration in hoher Reinheit wiedergewonnen werden. Der so wiedergewonnene Bis-(diarylphenoxy)-Ligand kann, üblicherweise ohne weitere Aufreinigungsschritte, im Rahmen einer neuen Charge mit den entsprechenden Aluminiumverbindungen der Formeln (II) bzw. (III) zum reaktiven Katalysatorkomplex umgesetzt werden, wobei bei derartig wiederhergestellten Katalysatorkomplexen keine bzw. keine nennenswerte Abschwächung der Reaktivität festzustellen ist. Darüber hinaus lassen sich aus der als Rückstand der vorstehend beschriebenen gewonnenen Mutterlauge nach Hydrolyse weitere Mengen an Isopulegol und dem jeweils eingesetzten Bis-(diarylphenoxy)-Ligand gewinnen. Im Rahmen dieser bevorzugten Ausführungsform umfasst das erfindungsgemäßen Cyclisierungsverfahren von Citronellal zu Isopulegol dementsprechend die folgenden Schritte:
a) destillative Entfernung des gegebenenfalls eingesetzten Lösungsmittels sowie der gegebenenfalls eingesetzten weiteren Verbindung (d.h. dem Carbonsäureanhydrid, Aldehyde, Ketone und/oder Vinylether) aus dem gemäß dem vorstehend beschriebenen Verfahren erhaltenen Produktgemisch,
b) Zusatz eines hochsiedenden Lösungsmittels zu dem in Schritt a) erhaltenen Rückstand,
c) destillative Abtrennung des Isopulegols aus dem in Schritt b) erhaltenen Gemisch und
d) Abkühlen des in Schritt c) erhaltenen Destillationssumpfes unter Kristallisation des eingesetzten Bis(diarylphenol)-Liganden der Formel (I).

Die erfindungsgemäße Cyclisierungsreaktion läßt sich nach Erreichen des gewünschten Reaktionsfortschritts auch in üblicher Weise, beispielsweise durch Zusatz eines wässrigen Reagenzes, etwa einer wässrigen Lauge wie beispielsweise Natrium- oder Kalilauge oder beispielsweise auch durch Zusatz von Wasser abbrechen. Die Aufarbeitung bzw. Isolierung kann dann in dem Fachmann an sich bekannter Weise durchgeführt werden.

Der gegebenenfalls eingesetzte Zusatzstoff, d.h. das eingesetzte Carbonsäureanhydrid, Keton bzw. der eingesetzte Aldehyd oder Vinylether kann abhängig von seinen physikalischen Eigenschaften (z.B. dem Siedepunkt) z.B. durch Destillation aus der ausreagierten Mischung weitgehend und in dem Maße, indem er nicht gegebenenfalls selbst umgesetzt wurde, zurückgewonnen werden.

Im Rahmen des erfindungsgemäßen Verfahrens erhält man Isopulegol üblicherweise in Form eines Gemisches der diastereiomeren Formen des Isopulegols: Isopulegol der Formel (XIII), neo-Isopulegol der Formel (XIV), neo-iso-Isopulegol der Formel (XV) und iso-isopulegol der Formel (XVI).

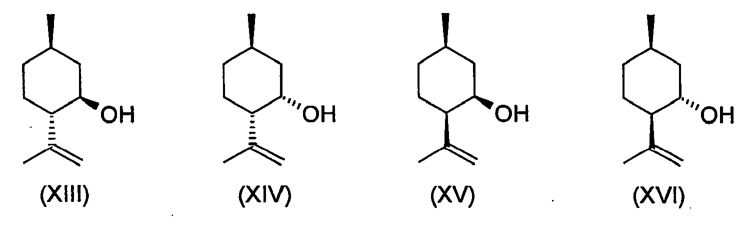

Erfindungsgemäß bevorzugt sind Ausführungsformen des erfindungsgemäßen Verfahrens, bei denen ein Diastereomerengemisch des Isopulegols anfällt, das zu mindestens etwa 85%, bevorzugt zu mindestens etwa 90% und besonders bevorzugt zu mindestens etwa 95% und ganz besonders bevorzugt zu mindestens etwa 98% aus dem Hauptdiastereomeren Isolpulegol der Formel (XII) bzw. der Formel (IVa) selbst besteht.

Das erfindungsgemäße Verfahren eignet sich, wie bereits erwähnt, in gleichem Maße zur Cyclisierung von racemischem wie auch nicht-racemischem, d.h. optisch aktivem Citronellal zu racemischem wie nicht-racemischem Isopulegol. In einer bevorzugten Ausführungsform dient das erfindungsgemäße Verfahren zur Herstellung von L-(-)-Isopulegeol durch Cyclisierung von D-(+)-Citronellal.

Das so hergestellte racemische bzw. nicht-racemische Isopulegol stellt ein wertvolles Intermediat zur Herstellung von racemischem bzw. nicht-racemischem Menthol, einem der weltweit bedeutensten Riech- bzw. Aromastoffe dar. Menthol kann durch dem Fachmann an sich bekannte Methoden der Hydrierung, speziell der katalytischen Hydrierung an geeigneten Übergangsmetallkatalysatoren, wie beispielsweise in Pickard et al., J. Chem. Soc. 1920, 1253; Ohloff et al., Chem. Ber. 1962, 95, 1400; Pavia et al., Bull. Soc. Chim. Fr. 1981, 24, Otsuka et al., Synthesis 1991, 665 oder in der EP 1 053 974 A beschrieben, aus Isopulegol erhalten werden. Dabei bleibt bei geeigneter Wahl der Reaktionsbedingungen die relative bzw. absolute Konfiguration des eingesetzten Isopulegols weitgehend, in vielen Fällen vollständig erhalten.

Die vorliegende Erfindung betrifft daher auch ein Verfahren zur Herstellung von racemischem oder nicht-racemischem Menthol, ausgehend von nach dem vorstehend beschriebenen Verfahren hergestelltem racemischem oder nicht-racemischem Isopulegol und anschließender Hydrierung dessen ethylenischer Doppelbindung. Insbesondere betrifft die vorliegende Erfindung ein Verfahren zur Herstellung von L-(-)-Menthol ausgehend von nach dem vorstehend beschriebenen Verfahren durch erfindungsgemäße Cyclisierung von D-(+)-Citronellal hergestelltem L-(-)-Isopulegol.

Die folgenden Beispiele dienen der Veranschaulichung der Erfindung, ohne sie in irgend einer Weise zu beschränken:

Gaschromatographische Analysen wurden nach der folgenden Methode durchgeführt: 30 m DB-WAX, ID.: 0,32 mm, FD.: 0,25 µm; 80 - 230°C, 3°C/min; Rf (Citronellal): 10,5; Rf (neo-Isopulegol): 13,24; Rf (Isopulegol): 13,58; Rf (neoiso-Isopulegol): 14,64; Rf (iso-Isopulegol) 15,28; Rf (Citronellsäurecitronellylester): 39,80. Konzentrationen der erhaltenen Reaktionsprodukte in der Reaktionslösung (jeweils in Gew.-%) wurden GCanalytisch mittels eines internen Standards ermittelt. Die zusätzlich angegebenen korrespondierenden Massenangaben (jeweils in g) wurden daraus rechnerisch extrapoliert und können daher leichte Abweichungen aufweisen. Diastereoselktivitäten wurden aus den jeweiligen GC-Flächen-% der vier Diastereomere ermittelt.

### Beispiel 1: Cyclisierung von Citronella zu Isopulegol in Gegenwart eines aus dem Liganden Ia₁-1 hergestellten Katalysators und in Gegenwart von Essigsäureanhydrid

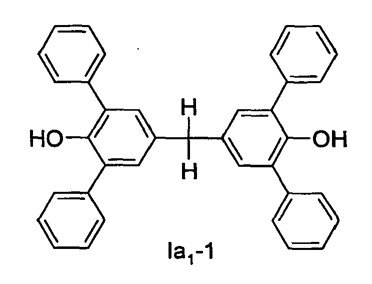

In einen ausgeheizten Kolben gab man 1,05 mmol des Liganden Ia₁-1 und 10 ml wasserfreies Toluol. Zu der klaren Lösung gab man bei Raumtemperatur 350 µl (0.66 mmol, 1 mol-%) einer 25%igen Lösung von Triethylaluminium in Toluol. Die Lösung wurde für 1 h bei 25 °C gerührt. Nach wenigen Minuten erhielt man eine gelartige Suspension des Katalysators. Die Katalysator-Suspension wurde auf 0 °C gekühlt und es wurde ein Gemisch aus 10.15 g (65.8 mmol) auf 0°C vorgekühltem Citronellal und 1 Gew.-% (bezogen auf Citronellal) Essigsäureanhydrid über einen Zeitraum von 6 h zugegeben. Die Reaktionsmischung wurde gerührt und es wurden in regelmäßigen Abständen Proben genommen und mit 8 %-iger NaOH hydrolysiert. Hierbei fiel das enthaltene Aluminium als Hydroxid aus und man erhielt zunächst eine Suspension. Nach einiger Zeit entstanden zwei klare Phasen. Die organische Phase wurde gaschromatographisch analysiert. Die Ergebnisse sind in Tabelle 4 zusammengestellt:

**Tabelle 4:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew.-% | Ester* in g |
|---|---|---|---|---|---|---|---|---|---|
| 1 | 2,03 | 83,15 | 1,69 | 13,00 | 0,26 | | 0,00 | | 0,00 |
| 2 | 4,06 | 59,55 | 2,42 | 33,04 | 1,34 | 0,44 | 0,02 | 0,72 | 0,03 |
| 3 | 6,09 | 54,43 | 3,31 | 37,17 | 2,26 | 0,49 | 0,03 | 0,79 | 0,05 |
| 4 | 8,12 | 49,48 | 4,02 | 42,54 | 3,45 | 0,48 | 0,04 | 0,79 | 0,06 |
| 5 | 10,15 | 46,33 | 4,70 | 45,50 | 4,62 | 0,46 | 0,05 | 0,67 | 0,07 |
| 6 | 10,15 | 32,08 | 3,26 | 59,70 | 6,06 | 0,47 | 0,05 | 0,73 | 0,07 |
| 72 | 10,15 | 0,25 | 0,03 | 89,60 | 9,09 | 0,89 | 0,09 | 0,78 | 0,08 |

| | | | | | | | | | |
|---|---|---|---|---|---|---|---|---|---|
| * Citronellsäurecitronellylester | | | | | | | | | |

Die Cyclisierungsreaktion ergab Isopulegol mit einer Selektivität von 90 % bezogen auf alle Isopulegol-Isomere. Die Diastereoselektivtät (neo-Isopulegol : Isopulegol : neoiso-Isopulegol : iso-Isopulegol) betrug 0,4 : 99,4 : 0,2 : 0,0.

### Beispiel 2: Cyclisierung unter Verwendung des Liganden Ia₁-4 (mit Essigsäureanhydrid)

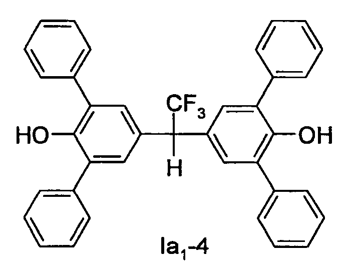

Beispiel 1 wurde unter Verwendung des Liganden Ia₁-4 (in größerem Maßstab) unter ansonsten unveränderten Bedingungen wiederholt. Die Ergebnisse sind in Tabelle 5 zusammengestellt.

**Tabelle 5:**

| Zeit in h | Citronellal zugegeben in g | Citronellal in Gew.-% | Citronellal in g | Isopulegol in Gew.-% | Isopulegol in g | Citronellol in Gew.-% | Citronellol in g |
|---|---|---|---|---|---|---|---|
| 2 | 16,92 | 26,54 | 4,49 | 63,00 | 10,66 | 1,63 | 0,28 |
| 3 | 25,38 | 24,23 | 6,15 | 65,87 | 16,72 | 1,53 | 0,39 |
| 4 | 33,83 | 19,14 | 6,48 | 72,54 | 24,54 | 1,40 | 0,47 |
| 5 | 42,29 | 17,66 | 7,47 | 74,80 | 31,63 | 1,20 | 0,51 |
| 6 | 50,75 | 19,73 | 10,01 | 73,22 | 37,16 | 1,04 | 0,53 |
| 7 | 50,75 | 11,97 | 6,07 | 80,51 | 40,86 | 1,02 | 0,52 |
| 24 | 50,75 | 1,24 | 0,63 | 90,11 | 45,73 | 0,96 | 0,49 |

Nach 24 h Reaktionszeit war der Umsatz an Citronellal vollständig mit einer Selektivität von 90% bezüglich aller Isopulegol-Isomere.Die Diastereoselektivität (neo-Isopulegol : Isopulegol : neoiso-Isopulegol : iso-Isopulegol) betrug 0,6 : 99,0 :0,3 : 0,1.

### Beispiel 3: Cyclisierung unter Verwendung des Liganden Ia₂-1 (ohne Zusätze)

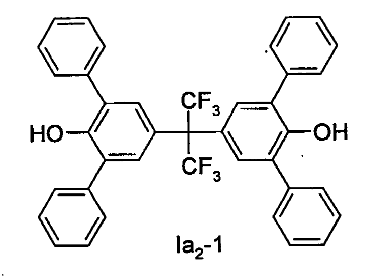

In einen ausgeheizten Kolben gab man 640 mg (1,0 mmol) des Liganden Ia₂-1 und 10 ml wasserfreies Toluol. Zu der klaren Lösung gab man bei Raumtemperatur 350 µl (0,65 mmol, 1 mol-% bzgl. Citronellal) einer 0,66 M Lösung von Triethylaluminium in Toluol. Die Lösung wurde für 1 h bei 25 °C gerührt, nach wenigen Minuten erhielt man eine gelartige Suspension des Katalysators. Die Katalysator-Suspension wurde auf 0 °C gekühlt und es wurden 10,2 g (65,8 mmol) -15 °C kaltem Citronellal über einen Zeitraum von 6 h zugegeben. Die Reaktionsmischung wurde weitere 18 h bei 0 °C gerührt und es wurden in regelmäßigen Abständen Proben genommen und mit 8 %-iger NaOH hydrolysiert. Hierbei fiel das enthaltene Aluminium als Hydroxid aus und man erhielt zunächst eine Suspension. Nach einiger Zeit entstanden zwei klare Phasen. Die organische Phase wurde gaschromatographisch analysiert. Die Ergebnisse sind in Tabelle 6 zusammengestellt:

**Tabelle 6:**

| Zeit in h | Citronellal zugegeben in g | Citronellal in Gew.- % | Citronellal in g | Isopulegol in Gew.-% | Isopulegol in g | Citronellol in Gew.-% | Citronellol in g | Ester* in g/100 g per GC | Ester* in g |
|---|---|---|---|---|---|---|---|---|---|
| 2 | 3,38 | 6,01 | 0,75 | 17,34 | 2,17 | 0,23 | 0,00 | -- | -- |
| 3 | 5,08 | 9,13 | 1,30 | 21,54 | 3,06 | 0,34 | 0,01 | -- | -- |
| 4 | 6,77 | 14,48 | 2,30 | 22,32 | 3,54 | 0,55 | 0,02 | 0,31 | 0,05 |
| 5 | 8,46 | 18,88 | 3,32 | 24,35 | 4,28 | 0,77 | 0,03 | 0,68 | 0,12 |
| 6 | 10,15 | 24,94 | 4,80 | 24,38 | 4,70 | 1,03 | 0,05 | 1,34 | 0,26 |
| 7 | 10,15 | 24,23 | 4,67 | 25,49 | 4,91 | 1,16 | 0,06 | 1,67 | 0,32 |
| 24 | 10,15 | 13,80 | 2,66 | 26,82 | 5,17 | 3,08 | 0,16 | 11,19 | 2,16 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 1,6: 96,7 : 1,2 : 0,4.

### Beispiel 4: Cyclisierung unter Verwendung des Liganden Ia₂-1 (mit Essigsäureanhydrid)

In einen ausgeheizten Kolben gab man 640 mg (1,0 mmol) des Liganden Ia₂-1 und 10 ml wasserfreies Toluol. Zu der klaren Lösung gab man bei Raumtemperatur 350 µl (0,65 mmol, 1 mol-% bzgl. Citronellal) einer 0,66 M Lösung von Triethylaluminium in Toluol. Die Lösung wurde für 1 h bei 25 °C gerührt, nach wenigen Minuten erhielt man eine gelartige Suspension des Katalysators. Die Katalysator-Suspension wurde auf 0 °C gekühlt und es wurde ein Gemisch aus 10,2 g (65,8 mmol) -15 °C kaltem Citronellal und 0,1 g (1 Gew.-% bzgl. Citronellal) Essigsäureanhydrid über einen Zeitraum von 6 h zugegeben. Die Reaktionsmischung wurde weitere 18 h bei 0 °C gerührt und es wurden in regelmäßigen Abständen Proben genommen und mit 8 %-iger NaOH hydrolysiert. Hierbei fiel das enthaltene Aluminium als Hydroxid aus und man erhielt zunächst eine Suspension. Nach einiger Zeit entstanden zwei klare Phasen. Die organische Phase wurde gaschromatographisch analysiert. Die Ergebnisse sind in Tabelle 7 zusammengestellt:

**Tabelle 7:**

| Zeit in h | Citronellal zugegeben in g | Citronellal in g/100 | Citronellal in g | in g/100g | Isopulegol in g | Citronellol g/100g | Citronellol in g | Ester* in g/100 g | Ester* in g |
|---|---|---|---|---|---|---|---|---|---|
| 2 | 3,38 | 11,76 | 1,47 | 22,32 | 2,79 | 0,00 | 0,00 | 0,00 | 0,00 |
| 3 | 5,08 | 12,34 | 1,75 | 28,08 | 3,98 | 0,00 | 0,00 | 0,00 | 0,00 |
| 4 | 6,77 | 14,61 | 2,32 | 27,54 | 4,37 | 0,00 | 0,00 | 0,00 | 0,00 |
| 5 | 8,46 | 18,78 | 3,30 | 32,93 | 5,79 | 0,00 | 0,00 | 0,00 | 0,00 |
| 6 | 10,15 | 22,01 | 4,24 | 32,98 | 6,35 | 0,00 | 0,00 | 0,00 | 0,00 |
| 7 | 10,15 | 16,11 | 3,10 | 40,16 | 7,73 | 0,00 | 0,00 | 0,00 | 0,00 |
| 24 | 10,15 | 2,11 | 0,41 | 51,56 | 9,93 | 0,09 | 0,02 | 0,00 | 0,00 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,8 : 98,5 : 0,4: 0,3.

### Beispiel 5: Cyclisierung von Citronellal in Gegenwart eines aus dem Liganden Ia₂-3 hergestellten Katalysators und in Gegenwart von Essigsäureanhydrid mit anschließender Aufarbeitung und Rückgewinnung des Liganden

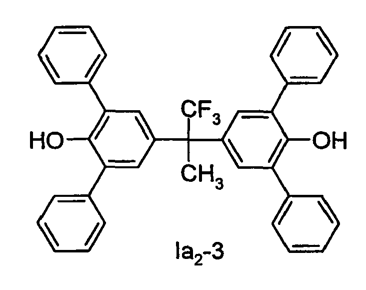

8,0 g (13,6 mmol) des Liganden Ia₂-3 wurden bei Raumtemperatur unter Argon in 140 ml Toluol gelöst. 4,78 ml (9,09 mmol) einer 25%-igen Triethylaluminium-Lösung in Toluol wurde zugeben, man ließ 1 h nachrühren. Die entstandene Katalysator-Suspension wurde auf 0°C abgekühlt und man gab innerhalb von in 5 h ein Gemisch von 70,0 g (0,45 mol) Citronellal und 0,7 g (6,86 mmol,1 Gew.-% bzgl. Citronellal) Essigsäureanhydrid zu. Es wurde 1 h bei 0°C und 12 h bei Raumtemperatur nachgerührt. Bei Versuchsende gab man 100 ml 8%-ige Natronlauge zu und trennte die Phasen. Man trocknete die organische Phase mit Natriumsulfat und entfernte das Lösungsmittel unter reduziertem Druck. Das Rohprodukt wurde bei 1 mbar über eine kurze Kolonne destilliert. Bei 58 °C Kopftemperatur erhielt man 68,4 g Isopulegol mit folgender Zusammensetzung (jeweils GC-Flächen -%): Isopulegol: 98,4%, neo-Isopulegol: 0,6%, neoiso-Isopulegol: 0,4%. Das entspricht einer chemischen Ausbeute von 97% bezogen auf alle Diastereomere und einer Diastereoselektivität von 99:1 (Isopulegol : andere Diastereomere).

Der bei der abschließenden Destillation verbleibende Destillationssumpf war ein hellgelber Feststoff in einer Menge von 7,7g, der zu 95 Gew.-% aus dem eingesetzten Liganden der Formel Ia₂-3 und zu 5 Gew,-% aus Isopulegol bestand.

Beispiele 6-13: Cyclisierung von Citronellal unter Einsatz verschiedener Carbonylverbindungen als Zusatzstoffe in der Cyclisierung unter Verwendung des Liganden Ia₂-3

### Beispiel 6: Cyclisierung ohne Zusatzstoff

In einen ausgeheizten Kolben gab man 580 mg (1,0 mmol) des Liganden Ia₂-3 und 20 ml wasserfreies Toluol. Zu der klaren Lösung gab man bei Raumtemperatur 350 µl (0,65 mmol, 1 mol-% bzgl. Citronellal) einer 0,66 M Lösung von Triethylaluminium in Toluol. Die Lösung wurde für 1 h bei 25 °C gerührt, nach wenigen Minuten erhielt man eine gelartige Suspension des Katalysators. Die Katalysator-Suspension wurde auf 0 °C gekühlt und es wurden10,2 g (65,8 mmol) -15 °C kaltem Citronellal über einen Zeitraum von 3 h zugegeben. Die Reaktionsmischung wurde weitere 4 h bei 0 °C gerührt und es wurden in regelmäßigen Abständen Proben genommen und mit 8 %-iger NaOH hydrolysiert. Hierbei fiel das enthaltene Aluminium als Hydroxid aus und man erhielt zunächst eine Suspension. Nach einiger Zeit entstanden zwei klare Phasen. Die organische Phase wurde gaschromatographisch analysiert. Die Ergebnisse sind in Tabelle 8 zusammengestellt:

**Tabelle 8:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 8,40 | 1,74 | 7,13 | 1,48 | 0,08 | 0,02 | 0,34 | 0,07 |
| 2 | 5,08 | 10,43 | 2,43 | 13,77 | 3,21 | 0,16 | 0,04 | 0,65 | 0,15 |
| 3 | 7,61 | 11,85 | 3,06 | 21,54 | 5,56 | 0,23 | 0,06 | 0,64 | 0,17 |
| 4 | 10,15 | 16,99 | 4,82 | 24,55 | 6,96 | 0,24 | 0,07 | 0,51 | 0,14 |
| 5 | 10,15 | 10,66 | 3,02 | 31,15 | 8,83 | 0,32 | 0,09 | 0,57 | 0,16 |
| 6 | 10,15 | 4,73 | 1,34 | 36,26 | 10,28 | 0,40 | 0,11 | 0,62 | 0,18 |
| 7 | 10,15 | 2,92 | 0,83 | 38,30 | 10,86 | 0,39 | 0,11 | 0,63 | 0,18 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,4 : 99,0 : 0,5 : 0,1.

### Beispiel 7: Zusatz von Acetaldehyd

Der Versuch wurde wie in Beispiel 6 wiederholt, nur dass dem Citronellal vor Zugabe 0,4 Gew.-% Acetaldehyd zugegeben wurden. Die Ergebnisse sind in Tabelle 9 zusammengestellt:

**Tabelle 9:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 10,27 | 2,13 | 6,56 | 1,36 | 0,10 | 0,02 | 0,35 | 0,07 |
| 2 | 5,08 | 12,53 | 2,92 | 13,73 | 3,20 | 0,13 | 0,03 | 0,28 | 0,07 |
| 3 | 7,61 | 13,51 | 3,49 | 20,45 | 5,28 | 0,15 | 0,04 | 0,27 | 0,07 |
| 4 | 10,15 | 12,34 | 3,50 | 26,87 | 7,62 | 0,26 | 0,07 | 0,28 | 0,08 |
| 5 | 10,15 | 6,84 | 1,94 | 32,05 | 9,09 | 0,30 | 0,09 | 0,31 | 0,09 |
| 6 | 10,15 | 3,45 | 0,98 | 35,33 | 10,02 | 0,33 | 0,09 | 0,31 | 0,09 |
| 7 | 10,15 | 1,62 | 0,46 | 36,88 | 10,46 | 0,36 | 0,10 | 0,32 | 0,09 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,4 : 99,1 : 0,5 : 0,0.

### Beispiel 8: Zusatz von Nitrobenzaldehyd

Der Versuch wurde wie in Beispiel 6 wiederholt, nur dass dem Citronellal vor Zugabe 1,3 Gew.-% Nitrobenzaldehyd zugegeben wurden. Die Ergebnisse sind in Tabelle 10 zusammengestellt:

**Tabelle 10:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 7,48 | 1,55 | 7,17 | 1,49 | 0,16 | 0,03 | 0,96 | 0,20 |
| 2 | 5,08 | 9,14 | 2,13 | 13,26 | 3,09 | 0,17 | 0,04 | 0,61 | 0,14 |
| 3 | 7,61 | 10,09 | 2,60 | 21,11 | 5,45 | 0,21 | 0,05 | 0,48 | 0,12 |
| 4 | 10,15 | 11,32 | 3,21 | 27,72 | 7,86 | 0,25 | 0,07 | 0,38 | 0,11 |
| 5 | 10,15 | 6,54 | 1,85 | 32,78 | 9,29 | 0,27 | 0,08 | 0,40 | 0,11 |
| 6 | 10,15 | 2,35 | 0,67 | 36,54 | 10,36 | 0,31 | 0,09 | 0,42 | 0,12 |
| 7 | 10,15 | 1,30 | 0,37 | 37,55 | 10,65 | 0,31 | 0,09 | 0,42 | 0,12 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,4 : 99,2 : 0,4 : 0,0.

### Beispiel 9: Zusatz von Chloral

Der Versuch wurde wie in Beispiel 6 wiederholt, nur dass dem Citronellal vor Zugabe 1,3 Gew.-% wasserfreies Chloral zugegeben wurden. Die Ergebnisse sind in Tabelle 11 zusammengestellt:

**Tabelle 11:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 4,49 | 0,93 | 9,85 | 2,04 | 0,00 | 0,00 | 0,00 | 0,00 |
| 2 | 5,08 | 5,09 | 1,18 | 17,69 | 4,12 | 0,00 | 0,00 | 0,00 | 0,00 |
| 3 | 7,61 | 6,05 | 1,56 | 26,45 | 6,83 | 0,00 | 0,00 | 0,00 | 0,00 |
| 4 | 10,15 | 8,02 | 2,27 | 31,63 | 8,97 | 0,00 | 0,00 | 0,00 | 0,00 |
| 5 | 10,15 | 3,00 | 0,85 | 37,38 | 10,60 | 0,00 | 0,00 | 0,00 | 0,00 |
| 6 | 10,15 | 1,22 | 0,35 | 39,17 | 11,10 | 0,00 | 0,00 | 0,00 | 0,00 |
| 7 | 10,15 | 0,56 | 0,16 | 39,63 | 11,24 | 0,00 | 0,00 | 0,00 | 0,00 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,5 : 99,3 : 0,2 : 0,0.

### Beispiel 10: Zusatz von Brenztraubensäureethylester

Der Versuch wurde wie in Beispiel 6 wiederholt, nur dass dem Citronellal vor Zugabe 1,0 Gew.-% Brenztraubensäureethylester zugegeben wurden. Die Ergebnisse sind in Tabelle 12 zusammengestellt:

**Tabelle 12:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 8,84 | 1,83 | 6,51 | 1,35 | 0,00 | 0,00 | 0,00 | 0,00 |
| 2 | 5,08 | 14,47 | 3,37 | 9,28 | 2,16 | 0,00 | 0,00 | 0,00 | 0,00 |
| 3 | 7,61 | 18,07 | 4,66 | 13,77 | 3,55 | 0,00 | 0,00 | 0,00 | 0,00 |
| 4 | 10,15 | 18,98 | 5,38 | 19,69 | 5,58 | 0,00 | 0,00 | 0,00 | 0,00 |
| 5 | 10,15 | 13,94 | 3,95 | 25,09 | 7,11 | 0,00 | 0,00 | 0,00 | 0,00 |
| 6 | 10,15 | 9,93 | 2,82 | 28,64 | 8,12 | 0,00 | 0,00 | 0,00 | 0,00 |
| 7 | 10,15 | 7,14 | 2,02 | 31,27 | 8,87 | 0,00 | 0,00 | 0,00 | 0,00 |

| | | | | | | | | | |
|---|---|---|---|---|---|---|---|---|---|
| *Citronellsäurecitronellylester | | | | | | | | | |

Das Diastereomerenverhältnis (neo-Isopulegol: Isopulegol : neoiso-Isopulegol : iso-Isopulegol) betrug 0,5 : 99,5 : 0,0 : 0,0.

### Beispiel 11: Zusatz von Trifluoraceton

Der Versuch wurde wie in Beispiel 6 wiederholt, nur dass dem Citronellal vor Zugabe 1,0 Gew.-% 1,1,1-Trifluoraceton zugegeben wurden. Die Ergebnisse sind in Tabelle 13 zusammengestellt:

**Tabelle 13:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 8,95 | 1,86 | 5,46 | 1,13 | 0,09 | 0,02 | 0,00 | 0,00 |
| 2 | 5,08 | 11,27 | 2,62 | 12,43 | 2,89 | 0,14 | 0,03 | 0,37 | 0,09 |
| 3 | 7,61 | 12,73 | 3,29 | 20,60 | 5,32 | 0,16 | 0,04 | 0,31 | 0,08 |
| 4 | 10,15 | 11,93 | 3,38 | 28,31 | 8,03 | 0,17 | 0,05 | 0,24 | 0,07 |
| 5 | 10,15 | 4,26 | 1,21 | 35,89 | 10,17 | 0,20 | 0,06 | 0,25 | 0,07 |
| 6 | 10,15 | 0,44 | 0,12 | 38,44 | 10,90 | 0,20 | 0,06 | 0,24 | 0,07 |
| 7 | 10,15 | 0,16 | 0,05 | 39,61 | 11,23 | 0,20 | 0,06 | 0,25 | 0,07 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,8 : 98,9 : 0,3 : 0,0.

### Beispiel 12:

Der Versuch wurde wie in Beispiel 6 mit einer Probe von durch Hydrierung hergestelltem Roh-Citronellal (mit erhöhtem Citronellol-Gehalt) wiederholt. Die Ergebnisse sind in Tabelle 14 zusammengestellt:

**Tabelle 14:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 11,48 | 2,38 | 2,94 | 0,61 | 0,32 | 0,07 | 6,86 | 1,42 |
| 2 | 5,08 | 17,03 | 3,96 | 6,40 | 1,49 | 0,53 | 0,12 | 6,72 | 1,56 |
| 3 | 7,61 | 17,42 | 4,50 | 11,33 | 2,92 | 1,06 | 0,27 | 9,93 | 2,56 |
| 4 | 10,15 | 9,99 | 2,83 | 13,72 | 3,89 | 2,17 | 0,62 | 20,52 | 5,82 |
| 5 | 10,15 | 3,97 | 1,13 | 15,07 | 4,27 | 2,67 | 0,76 | 26,34 | 7,47 |
| 6 | 10,15 | 2,61 | 0,74 | 15,35 | 4,35 | 2,83 | 0,80 | 27,73 | 7,86 |
| 7 | 10,15 | 1,96 | 0,56 | 15,52 | 4,40 | 2,92 | 0,83 | 28,22 | 8,00 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,5 : 99,5 : 0,0 : 0,0.

### Beispiel 13:

Der Versuch wurde wie in Beispiel 12 wiederholt, nur dass dem Citronellal vor Zugabe 1,0 Gew.-% 1,1,1-Trifluoraceton zugegeben wurden. Die Ergebnisse sind in Tabelle 15 zusammengestellt:

**Tabelle 15:**

| Zeit in h | Citronellal zugegeben in g | Citronellal in Gew.-% | Citronellal in g | Isopulegol in Gew.-% | Isopulegol in g | Citronellol in Gew.-% | Citronellol in g | Ester* in Gew% | Ester* in g |
|---|---|---|---|---|---|---|---|---|---|
| 1 | 2,54 | 6,20 | 1,29 | 7,10 | 1,47 | 0,18 | 0,04 | 0,1 | 0,021 |
| 2 | 5,08 | 9,83 | 2,29 | 13,71 | 3,19 | 0,08 | 0,02 | 0,11 | 0,026 |
| 3 | 7,61 | 11,18 | 2,89 | 21,55 | 5,56 | 0,09 | 0,02 | 0,15 | 0,039 |
| 4 | 10,15 | 11,33 | 3,21 | 28,61 | 8,11 | 0,10 | 0,03 | 0,17 | 0,048 |
| 5 | 10,15 | 3,26 | 0,92 | 37,46 | 10,62 | 0,10 | 0,03 | 0,19 | 0,054 |
| 6 | 10,15 | 0,85 | 0,24 | 39,48 | 11,19 | 0,10 | 0,03 | 0,20 | 0,057 |
| 7 | 10,15 | 0,17 | 0,05 | 40,00 | 11,34 | 0,09 | 0,03 | 0,19 | 0,054 |

| | | | | | | | | | |
|---|---|---|---|---|---|---|---|---|---|
| *Citronellsäurecitronellylester | | | | | | | | | |

Das Diastereomerenverhältnis (neo-Isopulegol : Isopulegol : neoiso-Isopulegol : iso-Isopulegol) betrug 0,5 : 99,0 : 0,3 : 0,2.

### Beispiel 14: Wiedergewinnung des Katalysatorkomplexes mit Ligand Ia₂-3

In einen ausgeheizten Kolben gab man 2,93 g (4,99 mmol) des Liganden Ia₂-3 und 100 ml wasserfreies Toluol. Zu der klaren Lösung gab man bei Raumtemperatur 1,75 ml (3,33 mmol, 5 mol-% bzgl. Citronellal) einer 0,66 M Lösung von Triethylaluminium in Toluol. Die Lösung wurde für 1 h bei 25 °C gerührt, nach wenigen Minuten erhielt man eine gelartige Suspension des Katalysators. Die Katalysator-Suspension wurde auf 0 °C gekühlt und es wurden10,2 g (65,8 mmol) -15 °C kaltes Citronellal über einen Zeitraum von 1 h zugegeben. Die Reaktionsmischung wurde eine weitere Stunde bei 0 °C gerührt. Die Reaktionsmischung wurde durch Filtration vom festen Katalysator getrennt. Das Filtrat wurde wie üblich aufgearbeitet, das Toluol wurde destillativ entfernt, und das erhaltene Rohprodukt wurde analysiert. Die Ergebnisse sind in Tabelle 16 zusammengestellt:

**Tabelle 16:**

| Citronellal zugegeben in g | Citronellal in Gew.-% | Citronellal in g | Isopulegol in Gew.-% | Isopulegol in g | Citronellol in Gew.-% | Citronellol in g |
|---|---|---|---|---|---|---|
| 10,15 | 0,11 | 0,02 | 69,56 | 10,02 | 1,38 | 0,11 |

Der abfiltrierte Katalysator wurde in weiteren 100 ml Toluol suspendiert. Die so entstandene Katalysator-Suspension wurde auf 0 °C gekühlt und es wurden10,2 g (65,8 mmol) -15 °C kaltes Citronellal über einen Zeitraum von 6 h zugegeben. Die Reaktionsmischung wurde weitere 18 h bei 0 °C gerührt und dann wie üblich aufgearbeitet und analysiert. Die Ergebnisse sind in Tabelle 17 zusammengestellt:

**Tabelle 17:**

| Zeit in h | Citronellal zugegeben in g | Citronellal in Gew.-% | Citronellal in g | Isopulegol in Gew.-% | Isopulegol in g | Citronellol in Gew.-% | Citronellol in g |
|---|---|---|---|---|---|---|---|
| 4 | 3,38 | 1,85 | 1,74 | 3,31 | 3,12 | 0,00 | 0,00 |
| 5 | 6,77 | 2,97 | 2,90 | 3,90 | 3,81 | 0,00 | 0,00 |
| 6 | 10,15 | 3,65 | 3,69 | 5,37 | 5,43 | 0,03 | 0,03 |
| 7 | 10,15 | 1,81 | 1,83 | 7,01 | 7,08 | 0,03 | 0,03 |
| 24 | 10,15 | 0,02 | 0,02 | 9,70 | 9,79 | 0,06 | 0,06 |

### Beispiel 15: Verfahren zur Rückgewinnung des Liganden Ia₂-3:

Zu einer Lösung von 23,44 g (40 mmol) des Liganden Ia₂-3 in 800 ml wasserfreiem Toluol gab man bei Raumtemperatur 14 ml (26,4 mmol, 1 mol-% bzgl. Citronellal) einer 0,66 M Lösung von Triethylaluminium in Toluol. Die Lösung wurde für 1 h bei 25 °C gerührt, nach wenigen Minuten erhielt man eine gelartige Suspension des Katalysators. Die Katalysator-Suspension wurde auf 0°C gekühlt und es wurde eine Mischung aus 406 g (2,64 mol) und 4,06 g (1 mol-% bezogen auf Citronellal) Trifluoraceton auf - 15 °C gekühlt und über einen Zeitraum von 3 h zugegeben. Man rührte für weitere 4 h bei 0°C nach, wobei eine klare Lösung entstand.

Bei Normaldruck wurde über eine 15 cm Vigreux-Kolonne das Toluol abdestilliert. Zu der klaren Lösung gab man 80 g 1-Methylnaphthalin als Hochsieder, und destillierte bei 10 mbar insgesamt 364 g Isopulegol ab. Das entspricht einer Ausbeute von 87%. Aus dem Sumpf kristallisierte beim Abkühlen weiße Kristalle aus. Durch Filtration erhielt man insgesamt 20,0 g eines weißen Feststoffs, der nach Analytik als Liganden Ia₂-3, verunreinigt mit ca 5% 1-Methylnaphthalin identifiziert werden konnte. Damit konnten durch eine einfache Kristallisation 81% des Liganden Ia₂-3 zurückgewonnen werden. Durch Abdestillieren von 1-Methylnaphthalin konnten weitere 3,1 g des Liganden Ia₂-3 in reiner Form erhalten werden.

### Beispiel 16 (nicht erfindungsgemäß): Cyclisierung von Citronellal mit einem Katalysator aus Ligand 45 mit Triethylaluminium in Gegenwart von Essigsäure unter Teilumsatz

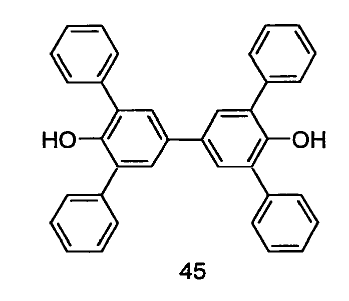

618 mg (1,2 mmol) des Liganden 36 (Reinheit: 98,8 %) wurden in 30 g Toluol gelöst. Es wurden langsam 0,342 g (0,74 mmol) Triethylaluminium in Form einer 25 %igen Lösung in Toluol zugegeben. Es bildete sich ein gelartiges Produkt und es wurde noch 40 Minuten bei 20°C nachgerührt. Danach wurde die Katalysatorlösung auf 0°C abgekühlt und eine Lösung von 11,7 g (74,4 mmol) racemischem Citronellal und 61 mg Essigsäure in 24 g Toluol in 6 Portionen zugegeben. Nach jeder Zugabe wurde etwa 50 Minuten nachgerührt. Anschließend wurde die Reaktionsmischung mit 10 ml 8 %-iger Natronlauge verrührt, die organische Phase abgetrennt und gaschromatographisch analysiert. Es wurden folgende Ergebnisse erhalten: Citronellal: 63,9%; neo-Isopulegol: 0,2%; Isopulegol: 24,9%; neoiso-Isopulegol: 0,1%; iso-Isopulegol: 0,07%; Citronellsäurecitronellylester: 7,3%.

Bei einem Umsatz von 34,1 % betrug die Selektivität für Isopulegol 74,2 %. Es wurde ein Produkt mit folgender Isomerenverteilung (neo-Isopulegol : Isopulegol : neoiso-Isopulegol : iso-Isopulegol) erhalten: 0,8 : 98,5 : 0,4: 0,3.

## Patentansprüche

1. Diarylphenoxy-Aluminium-Verbindungen erhältlich durch Umsetzung eines Bis(diarylphenol)-Liganden der Formel (I) 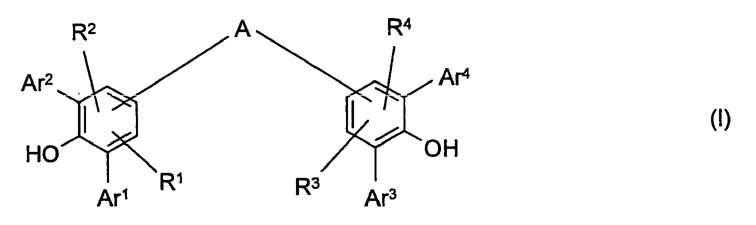 wobei
Ar¹, Ar², Ar³, Ar⁴ gleich oder verschieden sind und jeweils unabhängig voneinander einen Arylrest mit 6 bis15 Kohlenstoffatomen oder einen Heteroarylrest mit 2 bis 15 Kohlenstoffatomen, die gegebenenfalls jeweils 1 bis 7 gleiche oder verschiedene Substituenten, ausgewählt aus der Gruppe der Substituenten C₁- bis C₆-Alkyl, C₁- bis C₆-Perfluoralkyl, C₁- bis C₆-Alkoxy, C₇- bis C₁₂-Aralkyl, Halogen, -SiR^{5a}R^{6a}R^{7a}, substituiertes oder unsubstituiertes C₆- bis C₁₀-Aryl, -NR^{8a}R^{9a}, -SR^{10a}, -NO₂ tragen können, bedeuten,
R¹, R², R³, R⁴ gleich oder verschieden sind und jeweils unabhängig voneinander Wasserstoff, C₁- bis C₆-Alkyl, C₁- bis C₆-Perfluoralkyl, C₁- bis C₆-Alkoxy, C₇- bis C₁₂-Aralkyl, Halogen, -SiR^{5b}R^{6b}R^{7b}, substituiertes oder unsubstituiertes C₆- bis C₁₀-Aryl, -NR^{8b}R^{9b}, -SR^{10b}, -NO₂ bedeuten und R¹ oder R² und/oder R³ oder R⁴ gemeinsam mit A einen cyclischen aromatischen oder nicht-aromatischen Cyclus bilden kann, bedeuten und
A (1) für einen geradkettigen oder verzweigten und/oder cyclischen Kohlenwasserstoffrest mit 1 bis 25 Kohlenstoffatomen steht, der gesättigt oder ein- oder mehrfach ungesättigt und/oder teilweise aromatisch sein kann und gegebenenfalls eines oder mehrere gleiche oder verschiedene Heteroatome, ausgewählt aus der Gruppe der Heteroatome O, S, NR¹¹, und/oder eine oder mehrere gleiche oder verschiedene funktionelle Gruppen, ausgewählt aus der Gruppe der funktionellen Gruppen C(O), S(O), S(O)₂, aufweisen kann und gegebenenfalls einen oder mehrere gleiche oder verschiedene Substituenten, ausgewählt aus der Gruppe der Substituenten C₁- bis C₆-Alkyl, C₁- bis C₆-Perfluoralkyl, C₁- bis C₆-Alkoxy, C₁- bis C₁₀- Acyloxy, C₇- bis C₁₂-Aralkyl, Halogen, -SiR^{5c}R^{6c}R^{7c}, substituiertes oder unsubstituiertes C₆- bis C₁₀-Aryl, substituiertes oder unsubstituiertes C₂- bis C₁₀-Hetaryl, -NR^{8c}R^{9c}, -SR^{10c}, -NO₂, C₁-bis C₁₂-Acyl, C₁- bis C₁₀- Carboxyl tragen kann, oder
(2) für einen Arylrest mit 6 bis 15 Kohlenstoffatomen oder einen Heteroarylrest mit 2 bis 15 Kohlenstoffatomen steht, die gegebenenfalls jeweils 1 bis 5 Substituenten, ausgewählt aus der Gruppe der Substituenten C₁- bis C₆-Alkyl, C₁- bis C₆-Perfluoralkyl, C₁- bis C₆-Alkoxy, C₇- bis C₁₂-Aralkyl, Halogen, -SiR^{5d}R^{6d}R^{7d}, substituiertes oder unsubstituiertes C₆- bis C₁₀-Aryl, -NR^{8d}R^{9d}, SR^{10d}, NO₂ tragen können, oder
(3) für eine funktionelle Gruppe oder ein Heteroatom ausgewählt aus der Gruppe -O-, -S-, -N(R¹¹)-, -S(O)-, -C(O)-, -S(O)₂-, -P(R¹¹)-, -(R¹¹)P(O)- und -Si(R¹²R¹³) steht,
wobei die Reste R^{5a}, R^{6a}, R^{7a}, R^{8a}, R^{9a}, R^{10a} bis R^{5d}, R^{6d}, R^{7d}, R^{8d}, R^{9d}, R^{10d} und R¹¹ bis R¹³ jeweils unabhängig voneinander für C₁- bis C₆-Alkyl, C₇- bis C₁₂-Aralkyl und/oder substituiertes oder unsubstituiertes C₆- bis C₁₀-Aryl stehen, und die Reste R^{8a} und R^{9a}, R^{8b} und R^{9b}, R^{8c} und R^{9c}, R^{8d} und R^{9d} unabhängig voneinander jeweils gemeinsam auch einen cyclischen Kohlenwasserstoffrest mit 2 bis 8 Kohlenstoffatomen bilden können, der eines oder mehrere gleiche oder verschieden Heteroatome ausgewählt aus der Gruppe O, S, NR^{11a} aufweisen kann und R^{11a} die für R¹¹ angegebenen Bedeutungen haben kann,
mit einer Aluminium-Verbindung der Formel (II)
(R¹⁴)₃₋ₚAlHₚ (II),
wobei
Al Aluminium bedeutet und
R¹⁴ einen verzweigten oder unverzweigten Alkylrest mit 1 bis 5 Kohlenstoffatomen und
p 0 oder eine ganze Zahl von 1 bis 3 bedeutet,
und/oder
mit einer Aluminium-Verbindung der Formel (III)
MAIH₄ (III),
wobei
Al Aluminium bedeutet und
M Lithium, Natrium oder Kalium bedeutet.

2. Diarylphenoxy-Aluminium-Verbindungen nach Anspruch 1, erhältlich durch Umsetzung eines Bis(diarylphenol)-Liganden der Formel (Ia) 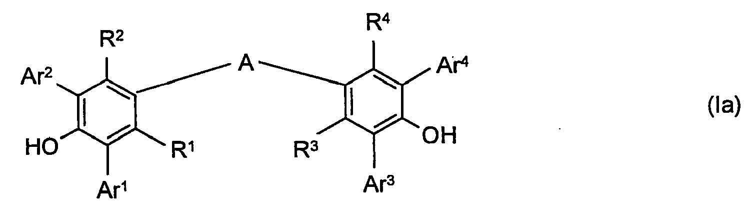 wobei die Reste Ar¹ bis Ar⁴, R¹ bis R⁴ und A die für Formel (I) angegebenen Bedeutungen besitzen.

3. Diarylphenoxy-Aluminium-Verbindungen nach Anspruch 1 oder 2, **dadurch gekennzeichnet, dass** die Reste Ar¹ bis Ar⁴ gleich sind.

4. Diarylphenoxy-Aluminium-Verbindungen nach einem der Anspruch 1 bis 3, **dadurch gekennzeichnet, dass** die Reste Ar¹ bis Ar⁴ Phenyl bedeuten.

5. Diarylphenoxy-Aluminium-Verbindungen nach einem der Ansprüche 1 bis 4, **dadurch gekennzeichnet, dass** die Reste R¹ bis R⁴ gleich sind.

6. Diarylphenoxy-Aluminium-Verbindungen nach einem der Ansprüche 1 bis 5, **dadurch gekennzeichnet, dass** die Reste R¹ bis R⁴ Wasserstoff bedeuten.

7. Diarylphenoxy-Aluminium-Verbindungen nach einem der Ansprüche 1 bis 6, **dadurch gekennzeichnet, dass** man den Bis(diarylphenol)-Liganden der Formel (I) und die Aluminium-Verbindungen der Formeln (II) und/oder (III) in einem molaren Verhältnis von 10:1 bis 1:1 einsetzt.

8. Diarylphenoxy-Aluminium-Verbindungen nach einem der Ansprüche 1 bis 7, **dadurch gekennzeichnet, dass** man den Bis(diarylphenol)-Liganden der Formel (I) und die Aluminium-Verbindungen der Formeln (II) und/oder (III) in einem molaren Verhältnis von 3:2 einsetzt.

9. Verwendung von Diarylphenoxy-Aluminium-Verbindungen gemäß einem der Ansprüche 1 bis 8 als Katalysatoren.

10. Verwendung nach Anspruch 9 zur Cyclisierung von Citronellal zu Isopulegol.

11. Verfahren zur Herstellung von Isopulegol der Formel (IV) 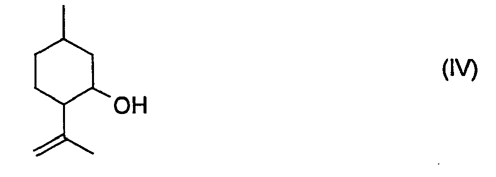 umfassend die Cyclisierung von Citronellal der Formel (V) 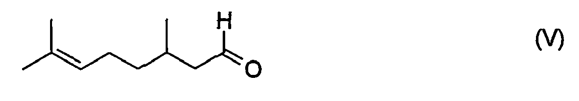 in Gegenwart eines Katalysators, der erhältlich ist durch Umsetzung eines Bis(diarylphenol)-Liganden der Formel (I) 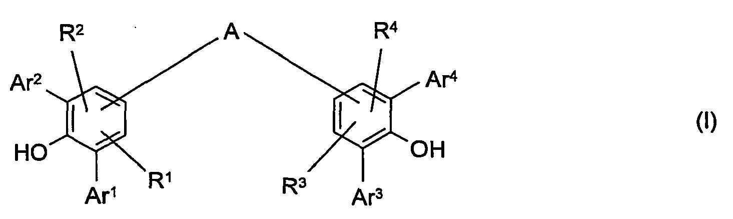 wobei
Ar¹, Ar², Ar³, Ar⁴, R¹, R², R³, R⁴ und A die vorstehend für Formel (I) angegebenen Bedeutungen besitzen,
mit einer Aluminium-Verbindung der Formel (II)
(R¹⁴)₃₋ₚAlHp (II),
wobei
Al Aluminium bedeutet und
R¹⁴ einen verzweigten oder unverzweigten Alkylrest mit 1 bis 5 Kohlenstoffatomen und
p 0 oder eine ganze Zahl von 1 bis 3 bedeutet,
und/oder
mit einer Aluminium-Verbindung der Formel (III)
MAIH₄ (III),
wobei
Al Aluminium bedeutet und
M Lithium, Natrium oder Kalium bedeutet.

12. Verfahren nach Anspruch 11, **dadurch gekennzeichnet, dass** man die Cyclisierung in Gegenwart eines Katalysators durchführt, der erhältlich ist durch Umsetzung eines Bis(diarylphenol)-Liganden der Formel (la) 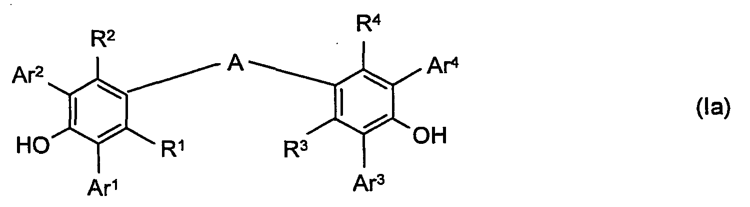 wobei
Ar¹, Ar², Ar³, Ar⁴, R¹, R², R³, R⁴ und A die vorstehend für Formel (I) angegebenen Bedeutungen besitzen.

13. Verfahren nach Anspruch 11 oder 12 zur Herstellung von optisch aktivem Isopulegol der Formel (IVa) 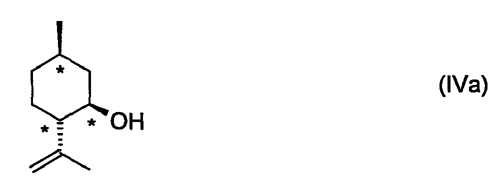 umfassend die Cyclisierung von optisch aktivem Citronellal der Formel (Va) 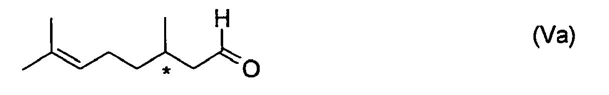 wobei (*) jeweils ein asymmetrisches Kohlenstoffatom bezeichnet.

14. Verfahren nach einem der Ansprüche 11 bis 13 zur Herstellung von L-(-)-Ispulegol umfassend die Cyclisierung von D-(+)-Citronellal.

15. Verfahren nach einem der Ansprüche 11 bis 14, **dadurch gekennzeichnet, dass** man als Aluminium-Verbindung eine Verbindung der Formel (II) einsetzt.

16. Verfahren nach einem der Ansprüche 11 bis 15, **dadurch gekennzeichnet, dass** man als Aluminium-Verbindung Trimethyl- oder Triethylaluminium einsetzt.

17. Verfahren nach einem der Ansprüche 11 bis 16, **dadurch gekennzeichnet, dass** man den Bis(diarylphenol)-Liganden der Formel (I) und die Aluminium-Verbindungen der Formeln (II) und/oder (III) in einem molaren Verhältnis von 10:1 bis 1:1 einsetzt.

18. Verfahren nach einem de Ansprüche 11 bis 17, **dadurch gekennzeichnet, dass** man den Bis(diarylphenol)-Liganden der Formel (I) und die Aluminium-Verbindungen der Formeln (II) und/oder (III) in einem molaren Verhältnis von 1,5:1 einsetzt.

19. Verfahren nach einem der Ansprüche 11 bis 18, **dadurch gekennzeichnet, dass** man die Cyclisierung in Gegenwart einer organischen Säure durchführt.

20. Verfahren nach Anspruch 19, **dadurch gekennzeichnet, dass** man als organische Säure Essigsäure einsetzt.

21. Verfahren nach einem der Ansprüche 11 bis 20, **dadurch gekennzeichnet, dass** man die Cyclisierung in Gegenwart mindestens einer Verbindung, ausgewählt aus der Gruppe der Carbonsäureanhydride, Aldehyde, Ketone und Vinylether durchführt.

22. Verfahren nach Anspruch 21, **dadurch gekennzeichnet, dass** man die Cyclisierung in Gegenwart eines Carbonsäureanhydrids der Formel (VI) 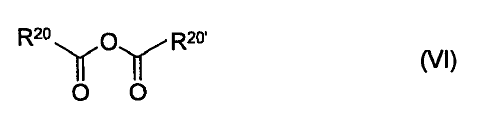 wobei
R²⁰, R^{20'} gleich oder verschieden sind und einen verzweigten oder unverzweigten C₁- bis C₁₂- Alkylrest oder C₇- bis C₁₂-Aralkylrest oder einen C₆- bis C₁₀-Arylrest bedeuten, wobei die genannten Reste jeweils einen oder mehrere gleiche oder verschiedene Substituenten, ausgewählt aus der Gruppe OR^{10e}, SR^{10f} NR^{8e}R^{9e} und Halogen aufweisen können und wobei R²⁰ und R^{20'} gemeinsam auch einen 5- bis 8-gliedrigen Ring bilden können, der eine oder mehrere ethylenische Doppeibindungen und ein oder mehrere gleiche oder verschiedene Heteroatome, ausgewählt aus der Gruppe O, S, NR^{11b} aufweisen kann und wobei R^{10e}, R^{10f}, R^{8e}, R^{9e} und R^{11b} unabhängig voneinander die für R¹¹ angegebenen Bedeutungen haben können,
oder in Gegenwart eines Aldehyds der Formel (VII) 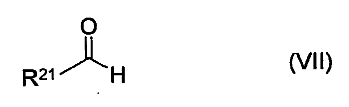 wobei
R²¹ einen verzweigten oder unverzweigten C₁- bis C₁₂- Alkylrest oder C₇- bis C₁₂-Aralkylrest oder einen C₆- bis C₁₀-Arylrest bedeutet, wobei die genannten Reste jeweils einen oder mehrere gleiche oder verschiedene Substituenten, ausgewählt aus der Gruppe OR^{10e}, SR^{10f} NR^{8e}R^{ge} und Halogen aufweisen können, wobei R^{10e,} R^{10f}, R^{8e} und R^{9e} unabhängig voneinander die für R¹¹ angegebenen Bedeutungen haben können,
bedeutet,
oder in Gegenwart eines Ketons der Formel (VIII) 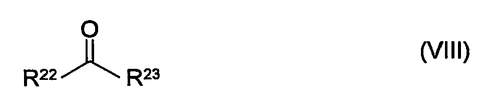 wobei
R²² , R²³ gleich oder verschieden sind und jeweils einen verzweigten oder unverzweigten C₁- bis C₁₂- Alkylrest oder C₇- bis C₁₂-Aralkylrest oder einen C₆- bis C₁₀-Arylrest oder einen C₁- bis C₆-Alkoxycarbonylrest bedeuten, wobei die genannten Reste jeweils einen oder mehrere gleiche oder verschiedene Substituenten, ausgewählt aus der Gruppe OR^{10e}, SR^{10f} NR^{8e}R^{9e} und Halogen aufweisen können, und wobei R²² und R²³ gemeinsam auch einen 5- bis 8-gliedrigen Ring bilden können, der eine oder mehrere ethylenische Doppelbindungen und ein oder mehrere gleiche oder verschiedene Heteroatome ausgewählt aus der Gruppe O, S, NR^{11b} aufweist und wobei R^{10e}, R^{10f}, R^{8e}, R^{9e} und R^{11b} unabhängig voneinander die für R¹¹ angegebenen Bedeutungen haben können,
bedeuten,
oder in Gegenwart eines Vinylethers der allgemeinen Formel (IX) 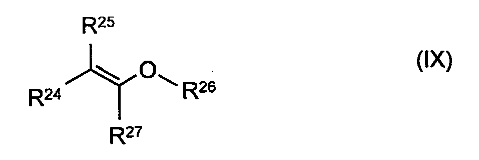 wobei
R²⁴, R²⁵, R²⁶, R²⁷ gleich oder verschieden sind und unabhängig voneinander jeweils einen verzweigten oder unverzweigten C₁- bis C₁₂- Alkylrest oder C₇- bis C₁₂-Aralkylrest oder einen C₆- bis C₁₀-Arylrest bedeuten, wobei die genannten Reste jeweils einen oder mehrere gleiche oder verschiedene Substituenten, ausgewählt aus der Gruppe ausgewählt aus der Gruppe Oxo, OR^{10e}, SR^{10f} NR^{8e}R^{9e} und Halogen aufweisen können und wobei R²⁵ und R²⁶ gemeinsam auch einen 5- bis 8-gliedrigen Ring bilden können, der eine oder mehrere ethylenische Doppelbindungen und ein oder mehrere gleiche oder verschiedene Heteroatome ausgewählt aus der Gruppe O, S, NR^{11b} aufweisen kann und wobei R^{10e}, R^{10f}, R^{8e}, R^{9e} und R^{11b} unabhängig voneinander die für R¹¹ angegebenen Bedeutungen haben können,
durchführt.

23. Verfahren nach Anspruch 21 oder 22, **dadurch gekennzeichnet, dass** man die Cyclisierung in Gegenwart von Essigsäureanhydrid, Propionsäurealdehyd, Pivalinsäureanhydrid und/oder Benzoesäureanhydrid durchführt.

24. Verfahren nach Anspruch 21 oder 22, **dadurch gekennzeichnet, dass** man die Cyclisierung in Gegenwart von Acetaldehyd, Propionaldehyd, Chloral, 1,1,1-Trifluoraceton, 1,1,1-Trifluoracetophenon, Brenztraubensäuremethylester, Brenztraubensäureethylester oder Hexafluoraceton durchführt.

25. Verfahren nach einem der Ansprüche 21 bis 24, **dadurch gekennzeichnet, dass** man das Carbonsäureanhydrid, den Aldehyd, das Keton und/oder den Vinylether in einer Menge von 0,01 mol-% bis 5 mol-% bezogen auf die Menge an eingesetztem Citronellal einsetzt.

26. Verfahren nach einem der Ansprüche 21 bis 25, **dadurch gekennzeichnet, dass** man eine Lösung oder Suspension des Katalysators vorlegt und ein Gemisch des umzusetzenden Citronellals mit dem Carbonsäureanhydrid, dem Aldehyd, dem Keton und/oder dem Vinylether zugibt.

27. Verfahren nach einem der Ansprüche 21 bis 26, **dadurch gekennzeichnet, dass** das Gemisch des umzusetzenden Citronellals mit dem Carbonsäureanhydrid, dem Aldehyd, dem Keton und/oder dem Vinylether innerhalb eines Zeitraums von 30 min bis 6 h zugibt.

28. Verfahren nach einem der Ansprüche 11 bis 27, **dadurch gekennzeichnet, dass** man den eingesetzten Bis(diarylphenol)-Liganden der Formel (I) nach erfolgter Umsetzung zurückgewinnt.

29. Verfahren nach Anspruch 28, umfassend die Schritte
a) destillative Entfernung des gegebenenfalls eingesetzten Lösungsmittels sowie der gegebenenfalls eingesetzten weiteren Verbindung aus dem Produktgemisch,
b) Zusatz eines hochsiedenden Lösungsmittels zu dem in Schritt a) erhaltenen Rückstand,
c) destillative Abtrennung des Isopulegols aus dem in Schritt b) erhaltenen Gemisch und
d) Abkühlen des in Schritt c) erhaltenen Destillationssumpfes unter Kristallisation des eingesetzten Bis(diarylphenol)-Liganden der Formel (I).

30. Verfahren nach einem der Ansprüche 11 bis 27, **dadurch gekennzeichnet, dass** man die als Katalysator eingesetzte Diarylphenoxy-Aluminium-Verbindung nach erfolgter Umsetzung zurückgewinnt.

31. Verfahren zur Herstellung von Menthol umfassend die Herstellung von Isopulegol der Formel (IV) nach einem der Ansprüche 11 bis 30 und anschließender Hydrierung der ethylenischen Doppelbindung des so erhaltenen Isopulegols.

32. Verfahren nach Anspruch 31 zur Herstellung von optisch aktivem Menthol umfassend die Schritte
a) Herstellung von optisch aktivem Isopulegol der Formel (IVa) nach einem der Ansprüche 11 bis 31 und
b) Hydrierung der ethylenischen Doppelbindung des so erhaltenen optisch aktiven Isopulegols.

33. Verfahren nach Anspruch 32 zur Herstellung von L-(-)-Menthol umfassend die Schritte
a) Herstellung von L-(-)-Isopulegol nach einem der Ansprüche 11 bis 32 und
b) Hydrierung der ethylenischen Doppelbindung des so erhaltenen optisch aktiven L-(-)-Isopulegols.

## Claims

1. A diarylphenoxyaluminum compound obtainable by reacting a bis(diarylphenol) ligand of the formula (I) 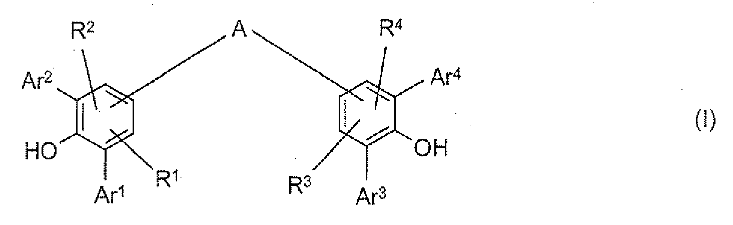 where
Ar¹, Ar², Ar³, Ar⁴ are identical or different and in each case, independently of one another, are an aryl radical having 6 to 15 carbon atoms or a heteroaryl radical having 2 to 15 carbon atoms which, if appropriate, can in each case carry 1 to 7 identical or different substituents selected from the group of substituents C₁- to C₆-alkyl, C₁- to C₆-perfluoroalkyl, C₁- to C₆-alkoxy, C₇- to C₁₂-aralkyl, halogen, -SiR^{5a}R^{6a}R^{7a}, substituted or unsubstituted C₆- to C₁₀-aryl, -NR^{8a}R^{9a}, -SR^{10a}, -NO₂,
R¹, R², R³, R⁴ are identical or different and in each case, independently of one another, are hydrogen, C₁- to C₆-alkyl, C₁- to C₆-perfluoroalkyl, C₁- to C₆-alkoxy, C₇- to C₂₂-aralkyl, halogen, SiR^{5b}R^{6b}R^{7b}, substituted or unsubstituted C₆- to C₁₀-aryl, -NR^{8b}R^{9b}, -SR^{10b}, -NO₂, and R¹ or R² and/or R³ or R⁴, together with A, can form a cyclic aromatic or nonaromatic cycle, and
A (1) is a straight-chain or branched and/or cyclic hydrocarbon radical having 1 to 25 carbon atoms which may be saturated or mono- or polyunsaturated and/or partially aromatic and, if appropriate, can have one or more identical or different hetero atoms selected from the group of hetero atoms O, S, NR¹¹, and/or one or more identical or different functional groups selected from the group of functional groups C(O), S(O), S(O)₂, and, if appropriate, can carry one or more identical or different substituents selected from the group of substituents C₁- to C₆-alkyl, C₁- to C₆-perfluoroalkyl, C₁- to C₆-alkoxy, C₁- to C₁₀-acyloxy, C₇- to C₁₂-aralkyl, halogen, -SiR^{5c}R^{6c}R^{7c}, substituted or unsubstituted C₆- to C₁₀-aryl, substituted or unsubstituted C₂- to C₁₀-hetaryl, -NR^{8c}R^{9c}, SR^{10c}, -NO₂, C₁-to C₁₂-acyl, C₁- to C₁₀-carboxyl, or
(2) is an aryl radical having 6 to15 carbon atoms or a heteroaryl radical having 2 to 15 carbon atoms which, if appropriate, can in each case carry 1 to 5 substituents, selected from the group of substituents C₁- to C₆-alkyl, C₁- to C₆-perfluoroalkyl, C₁- to C₆-alkoxy, C₇- to C₁₂-aralkyl, halogen, -SiR^{5d}R^{6d}R^{7d}, substituted or unsubstituted C₆- to C₁₀-aryl, -NR^{8d}R^{9d}, SR^{10d}, NO₂, or
(3) is a functional group or a hetero atom selected from the group -O-, -S-, -N(R¹¹)-, -S(O)-, -C(O)-, -S(O)₂-, -P(R¹¹)-, -(R¹¹)P(O)- and -Si (R¹²R¹³) ,
where the radicals R^{5a}, R^{6a}, R^{7a}, R^{8a}, R^{9a}, R^{10a} to R^{5d}, R^{6d}, R^{7d}, R^{8d}, R^{9d}, R^{10d} and R¹¹ to R¹³ are in each case, independently of one another, C₁- to C₆-alkyl, C₇- to C₁₂-aralkyl and/or substituted or unsubstituted C₆- to C₁₀-aryl, and the radicals R^{8a} and R^{9a}, R^{8b} and R^{9b}, R^{8c} and R^{9c}, R^{8d} and R^{9d}, independently of one another, can in each case together also form a cyclic hydrocarbon radical having 2 to 8 carbon atoms which can have one or more identical or different hetero atoms selected from the group O, S, NR^{11a} and R^{11a} can have the meanings given for R¹¹,
with an aluminum compound of the formula (II)
(R¹⁴)₃₋ₚAlHₚ (II),
where
Al is aluminum and
R¹⁴ is a branched or unbranched alkyl radical having 1 to 5 carbon atoms and
p is 0 or an integer from 1 to 3,
and/or
with an aluminum compound of the formula (III)
MAlH₄ (III),
where
Al is aluminum and
M is lithium, sodium or potassium.

2. The diarylphenoxyaluminum compound according to claim 1, obtainable by reacting a bis(diarylphenol) ligand of the formula (Ia) 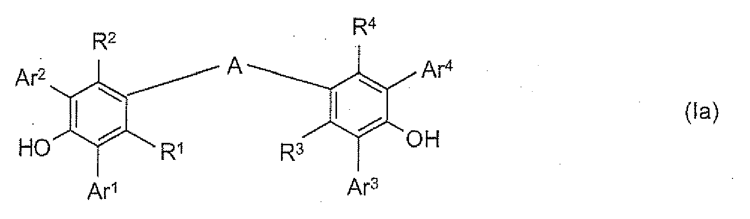 where the radicals Ar¹ to Ar⁴, R¹ to R⁴ and A have the meanings given for formula (I).

3. The diarylphenoxyaluminum compound according to claim 1 or 2, wherein the radicals Ar¹ to Ar⁴ are identical.

4. The diarylphenoxyaluminum compound according to one of claims 1 to 3, wherein the radicals Ar¹ to Ar⁴ are phenyl.

5. The diarylphenoxyaluminum compound according to one of claims 1 to 4, wherein the radicals R¹ to R⁴ are identical.

6. The diarylphenoxyaluminum compound according to one of claims 1 to 5, wherein the radicals R¹ to R⁴ are hydrogen.

7. The diarylphenoxyaluminum compound according to one of claims 1 to 6, wherein the bis(diarylphenol) ligand of the formula (I) and the aluminum compounds of the formulae (II) and/or (III) are used in a molar ratio of from 10:1 to 1:1.

8. The diarylphenoxyaluminum compound according to one of claims 1 to 7, wherein the bis(diarylphenol) ligand of the formula (I) and the aluminum compounds of the formulae (II) and/or (III) are used in a molar ratio of 3:2.

9. The use of diarylphenoxyaluminum compounds according to one of claims 1 to 8 as catalysts.

10. The use according to claim 9 for the cyclization of citronellal to isopulegol.

11. A method of producing isopulegol of the formula (IV) 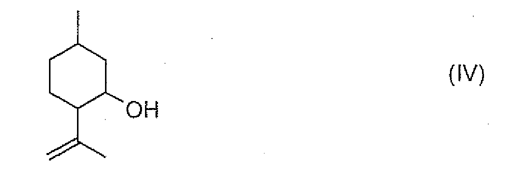 comprising the cyclization of citronellal of the formula (V) 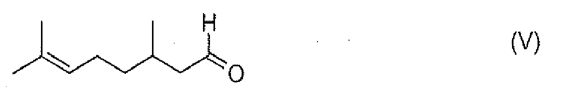 in the presence of a catalyst which is obtainable by reacting a bis(diarylphenol) ligand of the formula (I) 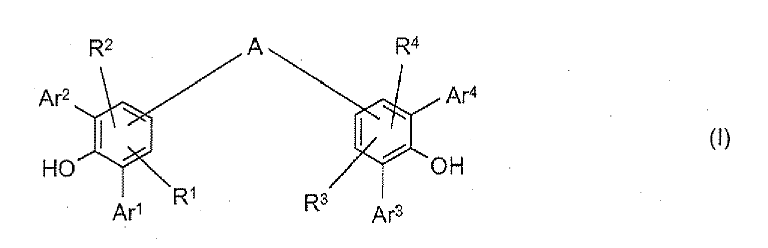 where
Ar¹, Ar², Ar³, Ar⁴, R¹, R², R³, R⁴ and A have the meanings given above for formula (I),
with an aluminum compound of the formula (II)
(R¹⁴)₃₋ₚAlHₚ (II),
where
Al is aluminum and
R¹⁴ is a branched or unbranched alkyl radical having 1 to 5 carbon atoms and
p is 0 or an integer from 1 to 3,
and/or
with an aluminum compound of the formula (III)
MAlH₄ (III),
where
Al is aluminum and
M is lithium, sodium or potassium.

12. The method according to claim 11, wherein the cyclization is carried out in the presence of a catalyst which is obtainable by reacting a bis(diarylphenol) ligand of the formula (Ia) 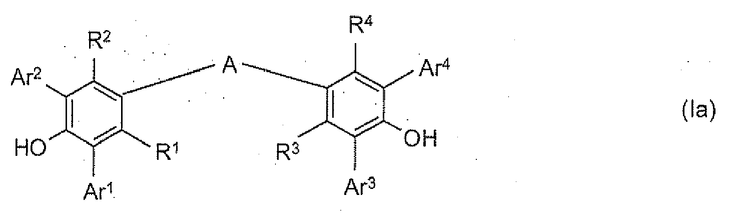 where
Ar¹, Ar², Ar³, Ar⁴, R¹, R², R³, R⁴ and A have the meanings given above for formula (I).

13. The method according to claim 11 or 12 for producing optically active isopulegol of the formula (IVa) 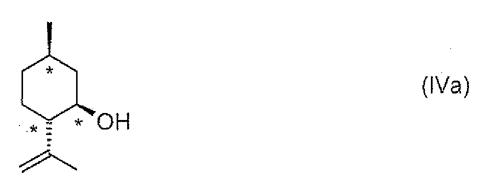 comprising the cyclization of optically active citronellal of the formula (Va) 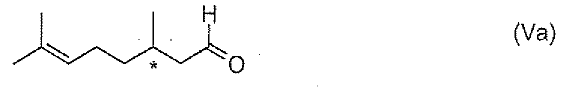 where (*) refers in each case to an asymmetric carbon atom.

14. The method according to one of claims 11 to 13 for producing L-(-)-isopulegol comprising the cyclization of D-(+)-citronellal.

15. The method according to one of claims 11 to 14, wherein the aluminum compound used is a compound of the formula (II).

16. The method according to one of claims 11 to 15, wherein the aluminum compound used is trimethylaluminum or triethylaluminum.

17. The method according to one of claims 11 to 16, wherein the bis(diarylphenol) ligand of the formula (I) and the aluminum compounds of the formulae (II) and/or (III) are used in a molar ratio of from 10:1 to 1:1.

18. The method according to one of claims 11 to 17, wherein the bis(diarylphenol) ligand of the formula (I) and the aluminum compounds of the formulae (II) and/or (III) are used in a molar ratio of 1.5:1.

19. The method according to one of claims 11 to 18, wherein the cyclization is carried out in the presence of an organic acid.

20. The method according to claim 19, wherein the organic acid used is acetic acid.

21. The method according to one of claims 11 to 20, wherein the cyclization is carried out in the presence of at least one compound selected from the group of carboxylic acid anhydrides, aldehydes, ketones and vinyl ethers.

22. The method according to claim 21, wherein the cyclization is carried out in the presence of a carboxylic acid anhydride of the formula (VI) 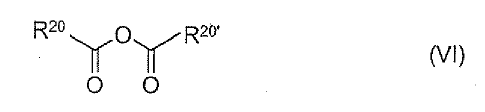 where
R²⁰, R^{20'} are identical or different and are a branched or unbranched C₁- to C₁₂-alkyl radical or C₇- to C₁₂-aralkyl radical or a C₆- to C₁₀-aryl radical, where the specified radicals can in each case have one or more identical or different substituents selected from the group OR^{10e}, SR^{10f} NR^{8e}R^{9e} and halogen and where R²⁰ and R^{20'} can together also form a 5- to 8-membered ring which can have one or more ethylenic double bonds and one or more identical or different hetero atoms selected from the group O, S, NR^{11b} and where R^{10e}, R^{10f}, R^{8e}, R^{9e} and R^{11b}, independently of one another, can have the meanings given for R¹¹,
or in the presence of an aldehyde of the formula (VII) 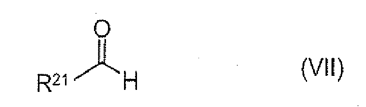 where
R²¹ is a branched or unbranched C₁- to C₁₂-alkyl radical or C₇- to C₁₂-aralkyl radical or a C₆- to C₁₀-aryl radical, where the specified radicals can in each case have one or more identical or different substituents selected from the group OR^{10e}, SR^{10f}, NR^{8e}R^{9e} and halogen, where R^{10e}, R^{10f}, R^{8e} and R^{9e}, independently of one another, can have the meanings given for R¹¹,
or in the presence of a ketone of the formula (VIII) 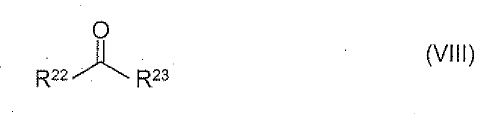 where
R²², R²³ are identical or different and are in each case a branched or unbranched C₁- to C₁₂-alkyl radical or C₇- to C₁₂-aralkyl radical or a C₆- to C₁₀-aryl radical or a C₁- to C₆-alkoxycarbonyl radical, where the specified radicals can in each case have one or more identical or different substituents selected from the group OR^{10e}, SR^{10f}, NR^{8e}R^{9e} and halogen, and where R²² and R²³ can together also form a 5- to 8-membered ring which has one or more ethylenic double bonds and one or more identical or different hetero atoms selected from the group O, S, NR^{11b}, and where R^{10e}, R^{10f}, R^{8e}, R^{9e} and R^{11b}, independently of one another, can have the meanings given for R¹¹,
or in the presence of a vinyl ether of the general formula (IX) 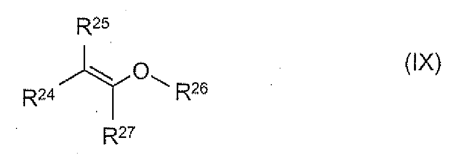 where
R²⁴, R²⁵, R²⁶, R²⁷ are identical or different and, independently of one another, are in each case a branched or unbranched C₁- to C₁₂-alkyl radical or C₇- to C₁₂-aralkyl radical or a C₆- to C₁₀-aryl radical, where the specified radicals can in each case have one or more identical or different substituents selected from the group oxo, OR^{10e}, SR^{10f}, NR^{8e}R^{9e} and halogen and where R²⁵ and R²⁶ can together also form a 5- to 8-membered ring which can have one or more ethylenic double bonds and one or more identical or different hetero atoms selected from the group O, S, NR^{11b} and where R^{10e}, R^{10f}, R^{8e}, R^{9e} and R^{11b}, independently of one another, can have the meanings given for R¹¹.

23. The method according to claim 21 or 22, wherein the cyclization is carried out in the presence of acetic anhydride, propionaldehyde, pivalic anhydride and/or benzoic anhydride.

24. The method according to claim 21 or 22, wherein the cyclization is carried out in the presence of acetaldehyde, propionaldehyde, chloral, 1,1,1-trifluoroacetone, 1,1,1-trifluoroacetophenone, methyl pyruvate, ethyl pyruvate or hexafluoroacetone.

25. The method according to one of claims 21 to 24, wherein the carboxylic anhydride, the aldehyde, the ketone and/or the vinyl ether is used in an amount of from 0.01 mol% to 5 mol%, based on the amount of citronellal used.

26. The method according to one of claims 21 to 25, wherein a solution or suspension of the catalyst is initially introduced and a mixture of the citronellal to be reacted with the carboxylicanhydride, the aldehyde, the ketone and/or the vinyl ether is added.

27. The method according to one of claims 21 to 26, wherein the mixture of the citronellal to be reacted with the carboxylicanhydride, the aldehyde, the ketone and/or the vinyl ether is added within a period of from 30 min to 6 h.

28. The method according to one of claims 11 to 27, wherein the bis(diarylphenol) ligand of the formula (I) used is recovered after the reaction has taken place.

29. The method according to claim 28, comprising the steps
a) distillative removal of the solvent used, if appropriate, and of the further compound used, if appropriate, from the product mixture,
b) addition of a high-boiling solvent to the residue obtained in step a),
c) distillative separation of the isopulegol from the mixture obtained in step b) and
d) cooling of the distillation bottom obtained in step c) with crystallization of the bis(diarylphenol) ligand of the formula (I) used.

30. The method according to one of claims 11 to 27, wherein the diarylphenoxy-aluminum compound used as catalyst is recovered after the reaction has taken place.

31. A method of producing menthol comprising the production of isopulegol of the formula (IV) according to one of claims 11 to 30 and subsequent hydrogenation of the ethylenic double bond of the isopulegol obtained in this way.

32. The method according to claim 31 of producing optically active menthol comprising the steps
a) production of optically active isopulegol of the formula (IVa) according to one of claims 11 to 31 and
b) hydrogenation of the ethylenic double bond of the optically active isopulegol obtained in this way.

33. The method according to claim 32 of producing L-(-)-menthol comprising the steps
a) production of L-(-)-isopulegol according to one of claims 11 to 32 and
b) hydrogenation of the ethylenic double bond of the optically active L-(-)-isopulegol obtained in this way.

## Revendications

1. Composés diarylphénoxy-aluminium pouvant être obtenus par réaction d'un ligand bis(diarylphénol) de la formule (I) _{:} 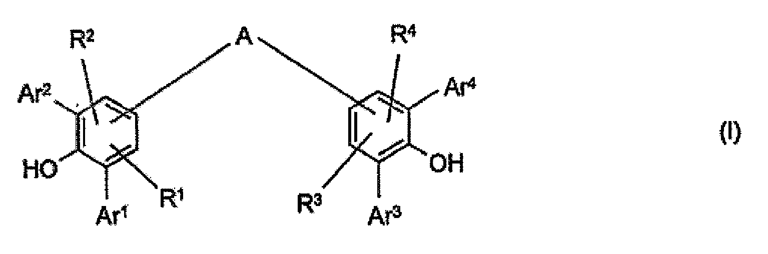 dans laquelle :
Ar¹, Ar², Ar³, Ar⁴ sont identiques ou différents et représentent chaque fois indépendamment les unes des autres, un radical aryle ayant 6 à 15 atomes de carbone, ou un radical hétéroaryle ayant 2 à 15 atomes de carbone, qui peuvent porter le cas échéant chaque fois 1 à 7 substituants identiques ou différents, choisis parmi le groupe des substituants alkyle en C₁ à C₆, perfluoroalkyle en C₁ à C₆, alcoxy en C₁ à C₆, aralkyle en C₇ à C₁₂, halogène, -SiR^{5a}R^{6a}R^{7a}, aryle en C₆ à C₁₀ substitué ou non substitué, -NR^{8a}R^{9a}, -SR^{10a}, - NO₂,
R¹, R², R³, R⁴ sont identiques ou différents et représentent chaque fois indépendamment les uns des autres, hydrogène, alkyle en C₁ à C₆, perfluoroalkyle en C₁ à C₆, alcoxy en C₁ à C₆, aralkyle en C₇ à C₁₂, halogène, -SiR^{5b}R^{6b}R^{7b}, aryle en C₆ à C₁₀ substitué ou non substitué, -NR^{8b}R^{9b}, -SR^{10b}, -NO₂, et R¹ ou R² et/ou R³ ou R⁴ peuvent former avec A, un cycle aromatique ou non aromatique, et
A représente (1) un radical hydrocarbure linéaire ou ramifié et/ou cyclique avec 1 à 25 atomes de carbone, qui peut être saturé ou une ou plusieurs fois insaturé et/ou partiellement aromatique et peut présenter le cas échéant, un ou plusieurs hétéroatomes identiques ou différents, choisis parmi le groupe des héteroatomes 0,5, NR¹¹ et/ou un ou plusieurs radicaux fonctionnels, choisis parmi le groupe des radicaux fonctionnels C(O), S(O), S(O)₂, et peut porter le cas échéant un ou plusieurs substituants identiques ou différents, choisis parmi le groupe des substituants alkyle en C₁ à C₆, perfluoroalkyle en C₁ à C₆, alcoxy en C₁ à C₆, acyloxy en C₁ à C₁₀, aralkyle en C₇ à C₁₂, halogène, -SiR^{5c}R^{6c}R^{7c}, aryle en C₆ à C₁₀ substitué ou non substitué, hétaryle en C₂ à C₁₀ substitué ou non substitué, -NR^{8c}R^{9c}, - SR^{10c}, -NO₂, acyle en C₁ à C₁₂, carboxyle en C₁ à C₁₀, ou
(2) un radical aryle ayant 6 à 15 atomes de carbone
ou un radical hétéroaryle ayant 2 à 15 atomes de carbone, qui peuvent porter le cas échéant chaque fois 1 à 5 substituants, choisis parmi le groupe des substituants alkyle en C₁ à C₆, perfluoroalkyle en C₁ à C₆, alcoxy en C₁ à C₆, aralkyle en C₇ à C₁₂, halogène, -SiR^{5d}R^{6d}R^{7d}, aryle en C₆ à C₁₀ substitué ou non substitué, -NR^{8d}R^{9d}, -SR^{10d}, -NO₂, ou
(3) un radical fonctionnel ou un hétéroatome choisi parmi le groupe -O-, -S-, -N(R¹¹)-, -S(O)-, - C(O)-, -S(O)₂-, -P(R¹¹)-, -(R¹¹)P(O)- et -Si(R¹²R¹³),
où les radicaux R^{5a}, R^{6a}, R^{7a}, R^{8a}, R^{9a}, R^{10a} à R^{5d}, R^{6d}, R^{7d}, R^{8d}, R^{9d}, R^{10d} et R¹¹ à R¹³ représentent chaque fois indépendamment les uns des autres alkyle en C₁ à C₆, aralkyle en C₇ à C₁₂, et/ou aryle en C₆ à C₁₀ substitué ou non substitué, et les radicaux R^{8a} et R^{9a}, R^{8b} et R^{9b}, R^{8c} et R^{9c}, R^{8d} et R^{9d} peuvent indépendamment les uns des autres former chaque fois ensemble, un radical hydrocarbure cyclique ayant 2 à 8 atomes de carbone, qui peut présenter un ou plusieurs hétéroatomes identiques ou différents, choisis parmi le groupe O, S, NR^{11a} et R^{11a} peut avoir les significations données pour R¹¹,
avec un composé de l'aluminium de la formule (II) :
(R¹⁴)₃₋ₚAlHₚ (II)
où
Al représente l'aluminium, et
R₁₄ représente un radical alkyle ramifié ou non ramifié ayant 1 à 5 atomes de carbone, et
p représente 0 ou un nombre entier allant de 1 à 3,
et/ou
avec un composé de l'aluminium de la formule (III) :
MAIH₄ (III)
où
Al représente l'aluminium, et
M représente lithium, sodium ou potassium.

2. Composés diarylphénoxy-aluminium selon la revendication 1 pouvant être obtenus par réaction d'un ligand bis(diarylphénol) de la formule (Ia) : 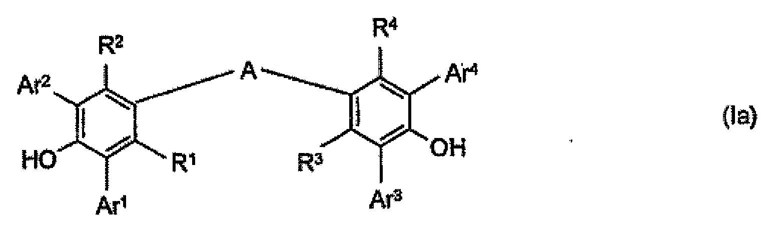 où les radicaux Ar¹ à Ar⁴, R¹ à R⁴ et A possèdent les significations données pour la formule (I).

3. Composés diarylphénoxy-aluminium selon la revendication 1 ou 2, **caractérisés en ce que** les radicaux Ar¹ à Ar⁴ sont identiques.

4. Composés diarylphénoxy-aluminium selon l'une des revendications 1 à 3, **caractérisés en ce que** les radicaux Ar¹ à Ar⁴ représentent phényle.

5. Composés diarylphénoxy-aluminium selon l'une des revendications 1 à 4, **caractérisés en ce que** les radicaux R¹ à R⁴ sont identiques.

6. Composés diarylphénoxy-aluminium selon l'une des revendications 1 à 5, **caractérisés en ce que** les radicaux R¹ à R⁴ représentent hydrogène.

7. Composés diarylphénoxy-aluminium selon l'une des revendications 1 à 6, **caractérisés en ce que** l'on met en oeuvre le ligand bis(diarylphénol) de la formule (I) et les composés de l'aluminium des formules (II) et/ou (III) en un rapport molaire de 10:1 à 1:1.

8. Composés diarylphénoxy-aluminium selon l'une des revendications 1 à 7, **caractérisés en ce que** l'on met en oeuvre le ligand bis(diarylphénol) de la formule (I) et les composés de l'aluminium des formules (II) et/ou (III) en un rapport molaire de 3:2.

9. Utilisation de composés diarylphénoxy-aluminium selon l'une des revendications 1 à 8, comme catalyseurs.

10. Utilisation selon la revendication 9, pour la cyclisation du citronellal en isopulégol.

11. Procédé de préparation d'isopulégol de la formule (IV) _{:} 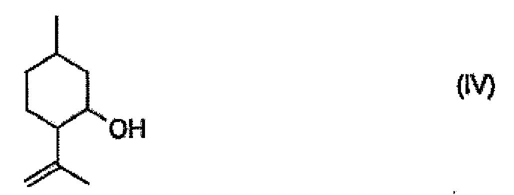 comprenant la cyclisation du citronellal de la formule (V) _{:} 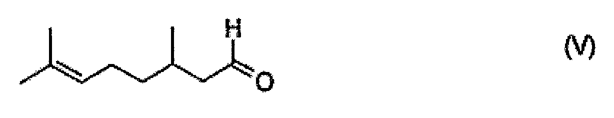 en présence d'un catalyseur qui peut être obtenu par réaction d'un ligand bis(diarylphénol) de la formule (I) _{:} 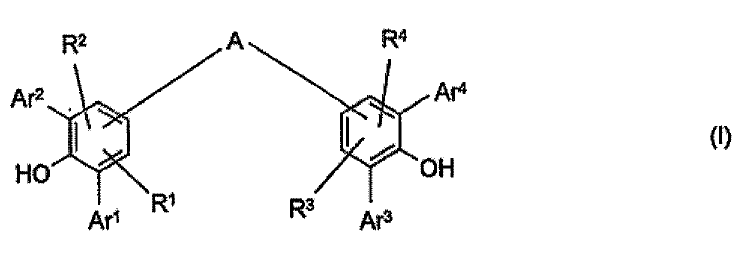 où
Ar¹, Ar², Ar³, Ar⁴, R¹, R², R³, R⁴ et A ont les significations données précédemment pour la formule (I),
avec un composé de l'aluminium de la formule (II) :
(R¹⁴)₃₋ₚAlHₚ (II)
où
Al représente l'aluminium, et
R¹⁴ représente un radical alkyle ramifié ou non ramifié ayant 1 à 5 atomes de carbone, et
p représente 0 ou un nombre entier allant de 1 à 3,
et/ou
avec un composé de l'aluminium de la formule (III) :
MAIH₄ (III)
où
Al représente l'aluminium, et
M représente lithium, sodium ou potassium.

12. Procédé selon la revendication 11, **caractérisé en ce que** l'on réalise la cyclisation en présence d'un catalyseur qui peut être obtenu par réaction d'un ligand bis(diarylphénol) de la formule (Ia) : 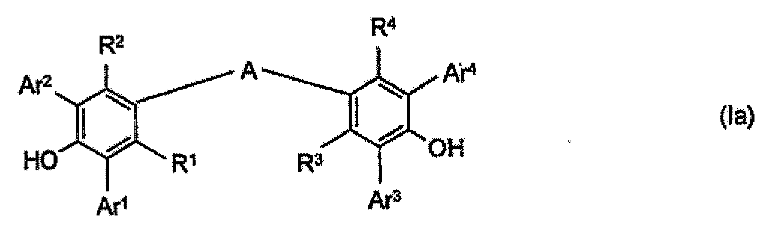 où Ar¹, Ar², Ar³, Ar⁴, R¹, R², R³, R⁴ et A possèdent les significations données précédemment pour la formule (I).

13. Procédé selon la revendication 11 ou 12, pour la préparation d'isopulégol optiquement actif de la formule (IVa) : 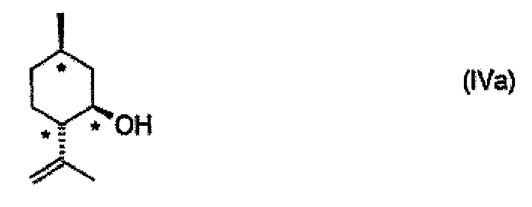 comprenant la cyclisation de citronellal optiquement actif de la formule (Va) : 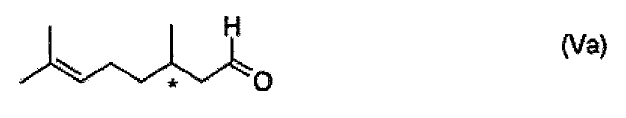 où (*) caractérise chaque fois un atome de carbone asymétrique.

14. Procédé selon l'une des revendications 11 à 13, pour la préparation de L-(-)-isopulégol comprenant la cyclisation de D-(+)-citronellal.

15. Procédé selon l'une des revendications 11 à 14, **caractérisé en ce que** l'on met en oeuvre comme composé de l'aluminium un composé de la formule (II).

16. Procédé selon l'une des revendications 11 à 15, **caractérisé en ce que** l'on met en oeuvre comme composé de l'aluminium le triméthyl- ou le triéthyl-aluminium.

17. Procédé selon l'une des revendications 11 à 16, **caractérisé en ce que** l'on met en oeuvre le ligand bis(diarylphénol) de la formule (I) et les composés de l'aluminium des formules (II) et/ou (III) en un rapport molaire de 10:1 à 1:1.

18. Procédé selon l'une des revendications 11 à 17, **caractérisé en ce que** l'on met en oeuvre le ligand bis(diarylphénol) de la formule (I) et les composés de l'aluminium des formules (II) et/ou (III) en un rapport molaire de 1,5:1.

19. Procédé selon l'une des revendications 11 à 18, **caractérisé en ce que** l'on réalise la cyclisation en présence d'un acide organique.

20. Procédé selon la revendication 19, **caractérisé en ce que** l'on met en oeuvre l'acide acétique comme acide organique.

21. Procédé selon l'une des revendications 11 à 20, **caractérisé en ce que** l'on réalise la cyclisation en présence d'au moins un composé, choisi parmi le groupe des anhydrides d'acide carboxylique, des aldéhydes, des cétones et des éthers vinyliques.

22. Procédé selon la revendication 21, **caractérisé en ce que** l'on réalise la cyclisation en présence d'un anhydride d'acide carboxylique de la formule (VI) _{:} 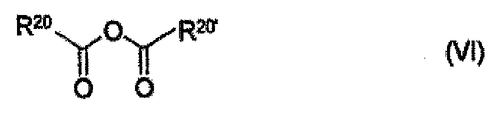 où
R²⁰, R^{20'} sont identiques ou différents et représentent un radical alkyle en C₁ à C₁₂ ramifié ou non ramifié ou un radical aralkyle en C₇ à C₁₂ ou un radical aryle en C₆ à C₁₀, où les radicaux cités peuvent présenter chaque fois un ou plusieurs substituants identiques ou différents, choisis parmi le groupe OR^{10e}, SR^{10f}, NR^{8e}R^{9e} et halogène et où R²⁰ et R^{20'} peuvent former ensemble également un cycle de 5 à 8 membres, qui peut présenter une ou plusieurs doubles liaisons éthyléniques et un ou plusieurs hétéroatomes identiques ou différents, choisis parmi le groupe O, S, NR^{11b}, et où R^{10e}, R^{10f}, R^{8e}, R^{9e} et R^{11b} peuvent avoir indépendamment les uns des autres les significations données pour R¹¹,
ou en présence d'un aldéhyde de la formule (VII) : 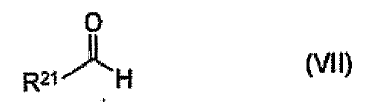 où
R²¹ représente un radical alkyle en C₁ à C₁₂ ramifié
ou non ramifié ou un radical aralkyle en C₇ à C₁₂ ou un radical aryle en C₆ à C₁₀, où les radicaux cités peuvent présenter chaque fois un ou plusieurs substituants identiques ou différents, choisis parmi le groupe OR^{10e}, SR^{10f}, NR^{8e}R^{9e} et halogène, où R^{10e}, R^{10f}, R^{8e} et R^{9e} peuvent avoir indépendamment les uns des autres les significations données pour R¹¹,
ou en présence d'une cétone de la formule (VIII) : 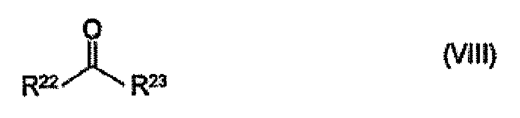 où
R²², R²³ sont identiques ou différents et représentent chaque fois un radical alkyle en C₁ à C₁₂ ramifié ou non ramifié ou un radical aralkyle en C₇ à C₁₂ ou un radical aryle en C₆ à C₁₀ ou un radical alcoxycarbonyle en C₁ à C₆, où les radicaux cités peuvent présenter chaque fois un ou plusieurs substituants identiques ou différents, choisis parmi le groupe OR^{10e}, SR^{10f}, NR^{8e}R^{9e} et halogène et où R²² et R²³ peuvent former ensemble également un cycle de 5 à 8 membres, qui présente une ou plusieurs doubles liaisons éthyléniques et un ou plusieurs hétéroatomes identiques ou différents, choisis parmi le groupe O, S, NR^{11b}, et où R^{10e}, R^{10f}, R^{8e}, R^{9e} et R^{11b} peuvent avoir indépendamment les uns des autres les significations données pour R¹¹,
ou en présence d'un éther vinylique de la formule (IX) : 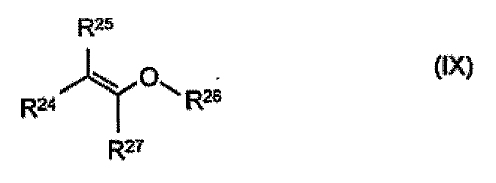 où
R²⁴, R²⁵, R²⁶, R²⁷ sont identiques ou différents et représentent indépendamment les uns des autres chaque fois un radical alkyle en C₁ à C₁₂ ramifié ou non ramifié ou un radical aralkyle en C₇ à C₁₂ ou un radical aryle en C₆ à C₁₀, où les radicaux cités peuvent présenter chaque fois un ou plusieurs substituants identiques ou différents, choisis parmi le groupe oxo, OR^{10e}, SR^{10f}, NR^{8e}R^{9e} et halogène et où R²⁵ et R²⁶ peuvent former ensemble également un cycle de 5 à 8 membres, qui peut présenter une ou plusieurs doubles liaisons éthyléniques et un ou plusieurs hétéroatomes identiques ou différents, choisis parmi le groupe O, S, NR^{11b}, et où R^{10e}, R^{10f}, R^{8e}, R^{9e} et R^{11b} peuvent avoir indépendamment les uns des autres les significations données pour R¹¹.

23. Procédé selon la revendication 21 ou 22, **caractérisé en ce que** l'on réalise la cyclisation en présence d'anhydride acétique, d'anhydride propionique, d'anhydride pivalique et/ou d'anhydride benzoïque.

24. Procédé selon la revendication 21 ou 22, **caractérisé en ce que** l'on réalise la cyclisation en présence d'acétaldéhyde, de propionaldéhyde, de chloral, de 1,1,1-trifluoroacétone, de 1,1,1-trifluoroacétophénone, d'ester méthylique de l'acide pyruvique, d'ester éthylique de l'acide pyruvique ou d'hexafluoroacétone.

25. Procédé selon l'une des revendications 21 à 24, **caractérisé en ce que** l'on met en oeuvre l'anhydride d'acide carboxylique, l'aldéhyde, la cétone et/ou l'éther vinylique en une quantité allant de 0,01 % en moles à 5 % en moles par rapport à la quantité de citronellal mis en oeuvre.

26. Procédé selon l'une des revendications 21 à 25, **caractérisé en ce que** l'on fournit une solution ou suspension du catalyseur et l'on ajoute un mélange du citronellal à faire réagir avec l'anhydride d'acide carboxylique, l'aldéhyde, la cétone et/ou l'éther vinylique.

27. Procédé selon l'une des revendications 21 à 26, **caractérisé en ce que** l'on ajoute le mélange du citronellal à faire réagir avec l'anhydride d'acide carboxylique, l'aldéhyde, la cétone et/ou l'éther vinylique en une période allant de 30 minutes à 6 heures.

28. Procédé selon l'une des revendications 11 à 27, **caractérisé en ce que** l'on récupère le ligand bis(diarylphénol) de formule (I) mis en oeuvre après la réaction.

29. Procédé selon la revendication 28, comprenant les étapes de :
a) élimination par distillation du solvant mis en oeuvre le cas échéant ainsi que des autres composés le cas échéant mis en oeuvre, du mélange de produits,
b) addition d'un solvant à haut point d'ébullition au résidu obtenu à l'étape a),
c) séparation par distillation de l'isopulégol du mélange obtenu à l'étape b), et
d) refroidissement du fond de distillation obtenu à l'étape c) avec cristallisation du ligand bis(dïarylphénol) de formule (I) mis en oeuvre.

30. Procédé selon l'une des revendications 11 à 27, **caractérisé en ce que** l'on récupère le composé diarylphénoxy-aluminium mis en oeuvre comme catalyseur, après la réaction.

31. Procédé pour la préparation de menthol, comprenant la préparation d'isopulégol de la formule (IV) selon l'une des revendications 11 à 30, et ensuite l'hydrogénation de la double liaison éthylénique de l'isopulégol ainsi obtenu.

32. Procédé selon la revendication 31, pour la préparation de menthol optiquement actif, comprenant les étapes de :
a) préparation d'isopulégol optiquement actif de la formule (IVa) selon l'une des revendications 11 à 31, et
b) hydrogénation de la double liaison éthylénique de l'isopulégol optiquement actif ainsi obtenu.

33. Procédé selon la revendication 32, pour la préparation de L-(-)-menthol, comprenant les étapes de :
a) préparation de L-(-)-isopulégol selon l'une des revendications 11 à 32, et
b) hydrogénation de la double liaison éthylénique du L-(-)-isopulégol optiquement actif ainsi obtenu.
